# EUROPEAN PATENT SPECIFICATION

(11) **EP 2 988 228 B1**
(45) Date of publication and mention of the grant of the patent: **26.07.2017**
(21) Application number: 14829706.2
(22) Date of filing: 18.06.2014
(51) Int. Cl.: H04L 12/26, H04W 4/02, G08G 1/0967, G01C 21/36, H04M 11/08, G09B 29/10, G09B 29/00, G08G 1/0969, G06F 17/30, H04W 4/04

(54) **SUBMISSION RETRIEVAL SYSTEM, SUBMISSION RETRIEVAL DEVICE, SUBMISSION RETRIEVAL METHOD, AND COMPUTER PROGRAM**
EINREICHUNGSABFRAGESYSTEM, EINREICHUNGSABFRAGEVORRICHTUNG, EINREICHUNGSABFRAGEVERFAHREN UND COMPUTERPROGRAMM
SYSTÈME DE RÉCUPÉRATION DE SOUMISSION, DISPOSITIF DE RÉCUPÉRATION DE SOUMISSION, PROCÉDÉ DE RÉCUPÉRATION DE SOUMISSION, ET PROGRAMME D'ORDINATEUR

(30) Priority: 24.07.2013 JP 2013153243
(43) Date of publication of application: 24.02.2016
(73) Proprietor: Aisin AW Co., Ltd., Anjo-shi, Aichi 444-1192 (JP)
(72) Inventor: YAMADA, Hideo, Anjo-shi Aichi 444-1192 (JP); MURAMATSU, Ryuya, Anjo-shi Aichi 444-1192 (JP)
(74) Representative: Kramer Barske Schmidtchen Patentanwälte PartG mbB
(86) International application number: PCT/JP2014/066127
(87) International publication number: WO 2015/012029

(56) References cited:
- WO-A1-2012/098651
- CN-A- 102 954 798
- JP-A- 2011 247 832
- JP-A- 2012 247 273
- JP-A- 2013 050 916
- JP-A- 2013 050 916
- US-A1- 2005 021 227
- US-A1- 2013 018 571

## Description

### TECHNICAL FIELD

The present invention relates to a posted text search system, a posted text search device, a posted text search method, and a computer program for searching for a text posted on a computer network.

### BACKGROUND ART

In recent years, there has been provided a system that enables a user to post a text on a computer network via a terminal and that enables the user to view a text posted by another user. Examples of such a system include a blog, an SNS (Social Network Service), Twitter (registered trademark), and chatting (hereinafter referred to as "SNS etc."). Among the posted texts, there are a large number of posted texts that include information related to traffic information such as congestion information and road closure information.

The SNS etc. advantageously allows a user to quickly acquire the latest information. Because the amount of information is huge, however, it is difficult to extract and provide only information required by the user viewing the SNS. Thus, as a means for searching for information required by a user from a large amount of information, Domestic Re-publication of PCT Publication No. 2010/004612, for example, proposes a technology for searching for location information from a DB, in which: when a search keyword such as a name or a genre is input by a user, a search is made for a location (hereinafter referred to as a "search location") that corresponds to the keyword; position information and address information on the search location are extracted from the DB; text data on a location name (such as a road name or a city name) that corresponds to the search location are acquired from the DB on the basis of the position information on the search location; and text data obtained by combining the address information on the search location extracted from the DB and the text data on the location name are output as the search result.

### [Related-art Documents]

### [Patent Documents]

[Patent Document 1] Domestic Re-publication of PCT Publication No. 2010/004612 ((pages 13 to 17 and FIG. 2)

### SUMMARY OF THE INVENTION

### [Problem to be Solved by the Invention]

In the technology described in Patent Document 1, however, position information and address information on all the search locations that correspond to the input keyword are extracted from the DB, and further, text data are generated from the extracted position information and address information to be output. In particular, depending on the input keyword, the number of the search locations may be numerous. For example, if a search is made using a keyword such as "convenience store" or "parking lot" in an urban area, the number of search locations is expected to be numerous. Thus, the process burden related to the search and the search time may be increased, and information that is not required by the user may also be output. Further, the search result needs to be filtered.

The present invention has been made to address the foregoing issue of the related art, and therefore has an object to provide a posted text search system, a posted text search device, a posted text search method, and a computer program that make it possible to appropriately extract only a posted text that includes information required by a user from texts posted on a computer network.

### [Means for Solving the Problem]

In order to achieve the foregoing object, the present invention provides a posted text search system according to any one of claims 1 and 6, a posted text search device according to claim 11, a posted text search method according to claim 12, and a computer program according to claim 13. Further developments of the invention are given in the dependent claims.

JP 2013 050916 A relates to a posting providing system, wherein a central server collects traffic data posted on social networks, a vehicle determines its route and requests traffic information from the central server, wherein the server searches for posted texts containing road names or place names situated on the vehicle route.

### [Effects of the Invention]

With the posted text search system, the posted text search device, the posted text search method, and the computer program according to the present invention, it is possible to set the name of an intersecting road that is highly likely to be congested, among intersecting roads that intersect the expected travel route for the user, to a search word on the basis of the facility which causes congestion and the road shape of roads in the neighborhood. As a result, it is possible to appropriately extract only a posted text that includes information required by the user from texts posted on a computer network using the set search word. In particular, it is possible to grasp congestion information associated with the expected travel route for the user, more specifically congestion information on an intersecting road that affects a flow of vehicles along the expected travel route, at an earlier timing via the posted text. It is not necessary for the user to input a search condition, which enables an improvement in operability.

### BRIEF DESCRIPTION OF THE DRAWINGS

[FIG. 1] FIG. 1 illustrates a schematic configuration of a posted text search system according to a first embodiment.
[FIG. 2] FIG. 2 is a block diagram illustrating the configuration of the posted text search system according to the first embodiment.
[FIG. 3] FIG. 3 illustrates an example of posted text information stored in a posted text information DB of a posted text information management center.
[FIG. 4] FIG. 4 illustrates an example of facility data included in map information.
[FIG. 5] FIG. 5 is a block diagram schematically illustrating a control system of a communication terminal according to the first embodiment.
[FIG. 6] FIG. 6 is a flowchart of a posted text search process program according to the first embodiment.
[FIG. 7] FIG. 7 illustrates a posted text guide screen displayed on a display.
[FIG. 8] FIG. 8 is a flowchart of a sub process program of a search word setting process according to the first embodiment.
[FIG. 9] FIG. 9 illustrates an extraction range for a congestion factor facility around a guide route.
[FIG. 10] FIG. 10 illustrates the positional relationship between the guide route and the congestion factor facility.
[FIG. 11] FIG. 11 illustrates a specific example of the search word setting process according to the first embodiment.
[FIG. 12] FIG. 12 is a flowchart of a sub process program of a search word setting process according to a second embodiment.
[FIG. 13] FIG. 13 illustrates a method of specifying an entry intersecting road.
[FIG. 14] FIG. 14 illustrates an extraction range for a congestion factor facility around the entry intersecting road.
[FIG. 15] FIG. 15 illustrates an extraction range for a congestion factor facility around the entry intersecting road.
[FIG. 16] FIG. 16 illustrates the positional relationship between the entry intersecting road and the congestion factor facility.
[FIG. 17] FIG. 17 illustrates a specific example of the search word setting process according to the second embodiment.

### MODES FOR CARRYING OUT THE INVENTION

A posted text search system according to a first embodiment and a second embodiment of the present invention will be described in detail below with reference to the drawings.

### [First Embodiment]

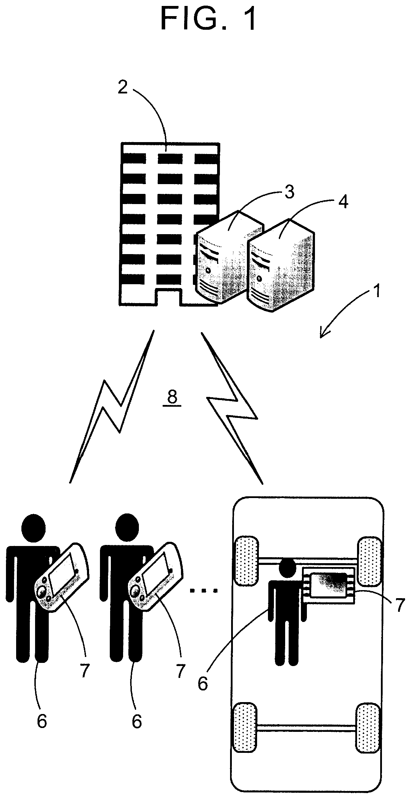

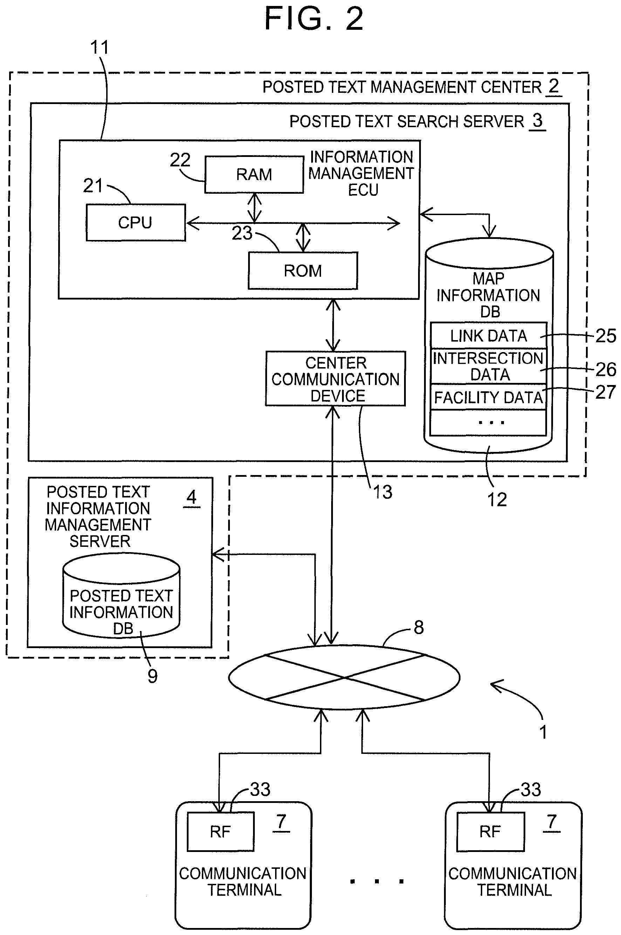

First, a schematic configuration of a posted text search system 1 according to the first embodiment will be described with reference to FIGS. 1 and 2. FIG. 1 illustrates a schematic configuration of the posted text search system 1 according to the first embodiment. FIG. 2 is a block diagram illustrating the configuration of the posted text search system 1 according to the first embodiment.

As illustrated in FIG. 1, the posted text search system 1 according to the first embodiment is basically composed of a posted text search server (posted text search device) 3 possessed by a posted text management center 2, a posted text information management server 4 also possessed by the posted text management center 2, and a communication terminal 7 owned by a user 6. Examples of the communication terminal 7 include a navigation device as an in-vehicle device mounted on a vehicle, a cellular phone, a PDA, a tablet terminal, and a smartphone. The user 6 may be traveling by travel means other than vehicle (such as by train, by bicycle, or on foot, for example), or may be not traveling. The posted text management center 2 and the communication terminal 7 can transmit and receive electronic data to and from each other via a communication network 8.

The posted text search server 3 is a server device that sets a search condition on the basis of an expected travel route for the user 6, the road shape of roads in the neighborhood, and facility information in the case where the user 6 of the communication terminal 7 demands to view a text posted on a computer network, that extracts a posted text that includes a content associated with the user 6 who requested information from posted texts stored in the posted text information management server 4, and that distributes information related to the extracted posted text to the communication terminal 7 to make the content of the posted text viewable to the user 6. The posted text search server 3 will be discussed in detail later.

The posted text information management server 4 is a server device that manages a blog, an SNS (Social Network Service), Twitter (registered trademark), chatting, and so forth (hereinafter referred to as "SNS etc."), and that stores and provides a text posted on the computer network for the SNS etc. The user can post a text from a PC and other communication devices that are connectable to the computer network, besides the communication terminal 7.

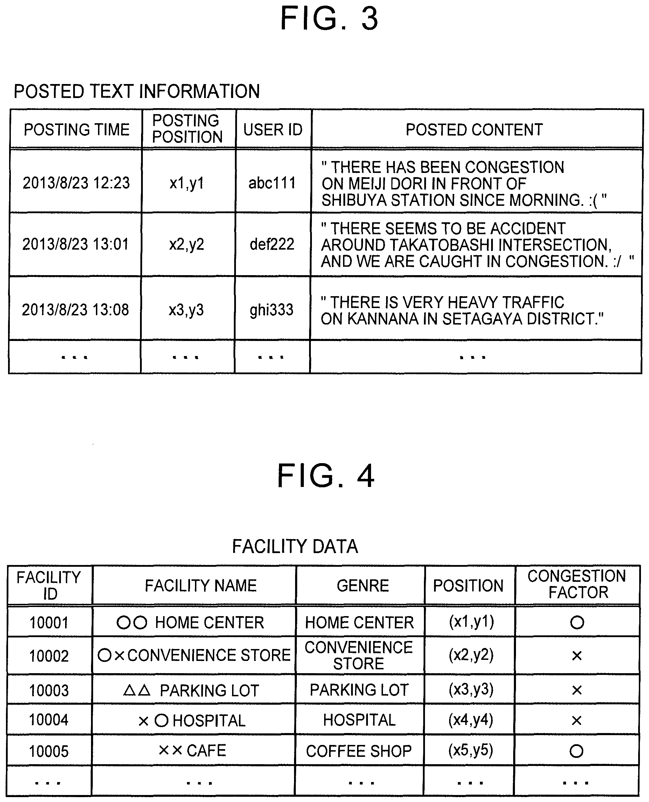

The posted text information management server 4 includes a posted text information DB 9 as a storage medium. Posted texts are sequentially stored in the posted text information DB 9. The posting time when the text is posted, the position (hereinafter referred to as a "posting position") of the posting person at the time when the text is posted, the ID of the posting person, and so forth are also stored in the posted text information DB 9 along with a sentence (character string) in the posted text. FIG. 3 illustrates an example of the posted text collected and provided by the posted text information management server 4. As illustrated in FIG. 3, the posted text includes the posting time, the posting position, the user ID, a sentence in the posted text, and so forth. In the posted text information management server 4, information on texts posted from users throughout the country is accumulatively stored in the posted text information DB 9, and when the amount of stored data reaches a predetermined amount or more, information related to the past posted texts is deleted sequentially from the oldest. The posted text information management server 4 may be installed at a center that is different from the posted text management center 2.

The communication terminal 7 may be an information communication terminal that has a function for specifying the current position of the communication terminal 7 (i.e. the current position of the user 6) such as GPS and a function of displaying a map image around the current position of the user 6, and may be a navigation device, a cellular phone, a PDA, a tablet terminal, a smartphone, and so forth, for example.

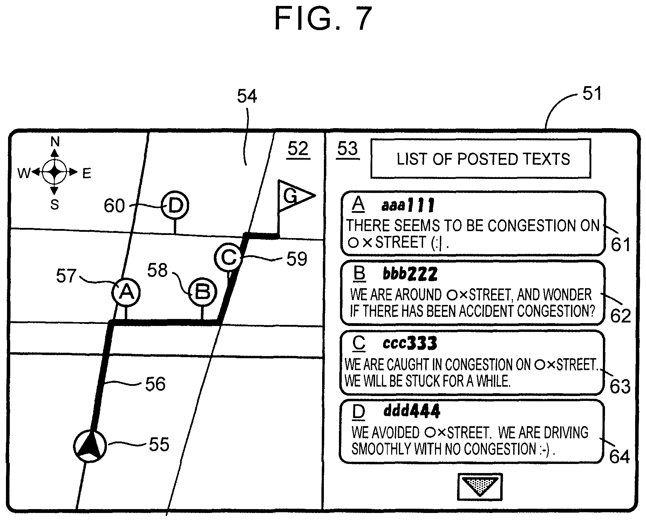

The communication terminal 7 is connected to the communication network 8 via a transmission/reception circuit section (RF) 33 to be discussed later to be bidirectionally communicable with the posted text management center 2. In the case where information related to a posted text is received from the posted text management center 2, the content of a sentence in the received posted text is displayed on the display of the communication terminal 7 as discussed later to make the content of the posted text viewable to the user (see FIG. 7). The communication terminal 7 will be discussed in detail later.

The communication network 8 includes a large number of base stations disposed throughout the country and a communication company that manages and controls the base stations, and is constituted by connecting the base stations and the communication company via a wire (such as optical fiber and ISDN) or wirelessly.

The base station includes a transceiver (transmitter-receiver) and an antenna for communication with the communication terminal 7. The base station has a role of wirelessly communicating with the communication company, and relaying communication between the communication terminal 7 which is located in a range (cell) reached by radio waves of the base station and the posted text management center 2 as a terminal of the communication network 8.

Subsequently, the configuration of the posted text search server 3 which constitutes the posted text search system 1 will be described in more detail with reference to FIG. 2. As illustrated in FIG. 2, the posted text search server 3 is basically composed of an information management ECU 11, a map information DB 12 as information storage means connected to the information management ECU 11, and a center communication device 13.

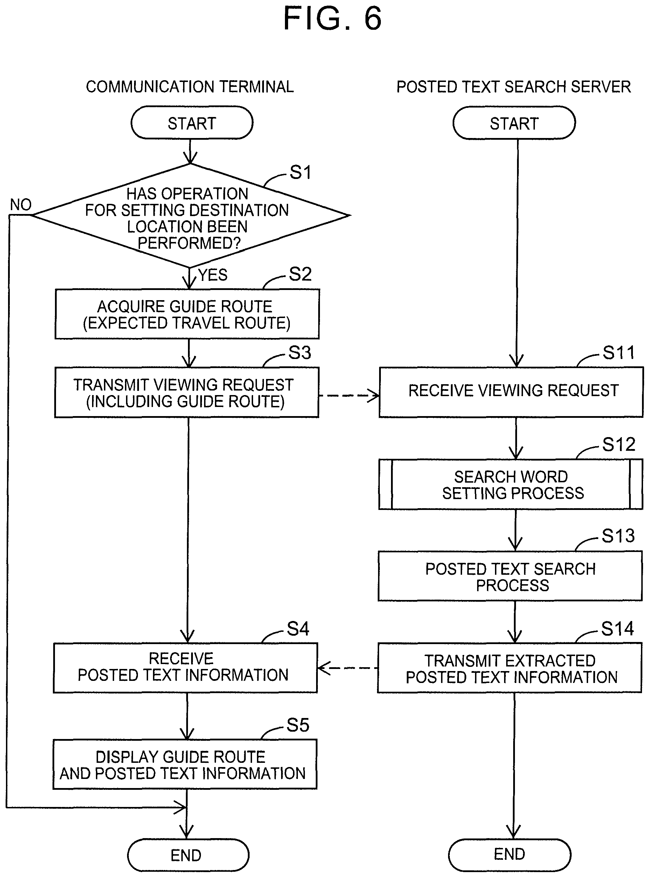

As illustrated in FIG. 2, the information management ECU 11 is an electronic control unit that performs various types of control in the posted text search server 3. The information management ECU 11 includes a CPU 21 that serves as a computation device and a control device, and internal storage devices such as a RAM 22 used as a working memory when the CPU 21 performs various computation processes, a ROM 23 that stores a posted text search process program (FIG. 6) to be discussed later etc. besides various control programs, and so forth. The information management ECU 11 constitutes various means as process algorithms together with an ECU of the communication terminal 7. For example, expected travel route acquisition means acquires an expected travel route for a mobile body such as a vehicle. Congestion facility determination means determines whether or not a congestion factor facility, which is a facility that causes congestion, is located around the expected travel route. Closer intersecting road acquisition means acquires, in the case where it is determined that a congestion factor facility is located around the expected travel route, a closer intersecting road, which is a road that is located on the side of the mobile body with respect to the congestion factor facility and that intersects the expected travel route. Search target name acquisition means acquires the name of the closer intersecting road as a search target name. Search condition setting means sets a search word from a character string of the search target name acquired by the search target name acquisition means. Search means extracts a posted text that corresponds to the search word set by the search condition setting means from texts posted on the computer network. Interval acquisition means acquires the arrangement interval between a first closer intersecting road and a second closer intersecting road. Road width acquisition means acquires the respective road widths of the first closer intersecting road and the second closer intersecting road.

The map information DB 12 is storage means for storing map information. The map information stored in the map information DB 12 is various information that is necessary for route exploration and map display such as a road network, and is composed of link data 25 on roads (links), node data on node points, intersection data 26 on intersections, facility data 27 on facilities, exploration data for exploring for a route, search data for searching for a location, map display data for displaying a map, and so forth, for example. The map information DB 12 is regularly updated to new map information.

The link data 25 store a link ID that identifies the links, end-portion node information that specifies a node positioned at an end portion of the link, a road type of a road constituted of the link, a road width, a road name, and so forth, for example. The intersection data 26 store a node ID of a node that constitutes the intersection, an intersection name, the presence or absence of a turn restriction, and so forth. The facility data 27 store a facility ID that identifies a facility, a facility name, a genre, and information that specifies the position of the facility, and additionally include information that specifies whether or not the facility corresponds to a congestion factor facility which is a facility that causes congestion. The congestion factor facility is a facility that may cause congestion on a road in the neighborhood because of the facility, and more specifically a facility that may cause congestion on a road in the neighborhood because of vehicles that enter the facility. Examples of the congestion factor facility include a large-scale commercial facility that attracts many people and a facility that was just introduced in the media such as TV and a magazine. Whether or not a facility corresponds to a congestion factor facility is determined on the basis of a history of congestions on roads in the neighborhood in the past acquired from a traffic information center and information presented in the media acquired from an external server. The determination as to whether or not a facility corresponds to a congestion factor facility may be made by the posted text search server 3, or may be made by another server.

FIG. 4 illustrates an example of the facility data 27. As illustrated in FIG. 4, the facility data 27 include a facility ID, a facility name, the type (genre) of the facility, position information (latitude and longitude) that specifies the position of the facility, and flag information on whether or not the facility corresponds to a congestion factor facility. For example, the example illustrated in FIG. 4 indicates that "○○ home center " and "×× cafe" are each a congestion factor facility. In the case where a congestion factor facility is located around the expected travel route for the user 6 as discussed later, the information management ECU 11 predicts that there is congestion on an intersecting road that intersects the expected travel route on the closer side of the congestion factor facility, and sets the name of the intersecting road to a search word.

The map information DB 12 may be possessed by an external server, rather than being possessed by the posted text search server 3, and the facility data 27 may be acquired by the posted text search server 3 from the external server through communication.

The center communication device 13 is a communication device that communicates with the communication terminal 7 via the communication network 8. In the first embodiment, information related to the posted text is transmitted and received to and from the communication terminal 7 via the center communication device 13.

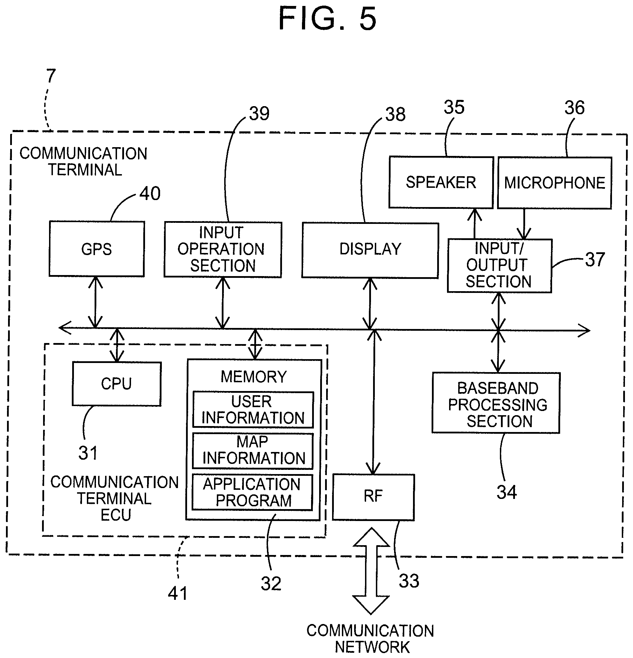

Next, a schematic configuration of the communication terminal 7 owned by the user 6 will be described with reference to FIG. 5. FIG. 5 is a block diagram schematically illustrating a control system of the communication terminal 7 according to the first embodiment.

As illustrated in FIG. 5, the communication terminal 7 is obtained by connecting a data bus BUS to components , namely a CPU 31, a memory 32 that stores user information (such as a user ID and a name) related to the user 6 who possesses the communication terminal 7, map information, and so forth, the transmission/reception circuit section (RF) 33 which transmits and receives a signal to and from the base stations of the communication network 8, a baseband processing section 34 that converts an RF (Radio Frequency) signal received by the transmission/reception circuit section 33 into a baseband signal and that converts a baseband signal into an RF signal, an input/output section 37 that serves as an interface for a microphone 35, a speaker 36, and so forth, a display 38 constituted of a liquid crystal display panel or the like, an input operation section 39 composed of a touch panel, a keyboard, and so forth, and a GPS 40.

The CPU 31 built in the communication terminal 7 is control means of the communication terminal 7 for executing various types of operation in accordance with an operation program stored in the memory 32, and composes a communication terminal ECU 41 together with the memory 32. The content of various processes performed by the communication terminal ECU 41 is displayed on the display 38 as necessary.

The memory 32 is a storage medium that stores, besides user information (such as a user ID and a name) related to the user 6 who possesses the communication terminal 7 and map information, an installed application program such as a navigation application, a current position history of the user 6, a guide route (expected travel route for the user 6) set in the navigation application, a posted text search process program (FIG. 6) to be discussed later, and so forth.

The map information stored in the memory 32 basically has the same configuration as the map information possessed by the posted text search server 3, and is composed of link data on roads (links), node data on node points, intersection data on intersections, facility data on facilities, map display data for displaying a map, exploration data for exploring for a route, search data for searching for a location, and so forth, for example. The map information may be stored in an external server (e.g. the posted text search server 3), rather than being stored in the memory 32, and may be acquired through communication. The memory 32 may be constituted of a hard disk, a memory card, an optical disk such as a CD and a DVD, or the like.

The display 38 is disposed on one surface of a housing, and may be a liquid crystal display, an organic EL display, or the like. The display 38 displays a top screen for executing various applications installed in the communication terminal 7, screens related to executed applications (such as an Internet screen, a mail screen, and a navigation screen), and various information such as an image and a movie. In particular, a map image including roads, traffic information, a guide route (expected travel route) from a departure location to a destination location, information on guidance along the guide route, and so forth are displayed on the navigation screen which is displayed in the case where the navigation application is executed. In the first embodiment, further, information related to a posted text received from the posted text management center 2 (such as the content of a sentence in the posted text and the ID of the posting person) is also displayed.

The input operation section 39 is constituted of a touch panel provided on the front surface of the display 38. The communication terminal ECU 41 performs control in order to execute corresponding operation on the basis of an electrical signal output in response to tapping on the touch panel etc. In the first embodiment, in particular, the input operation section 39 is used to start and operate various application programs, post a text, view a text posted on the computer network, etc. The input operation section 39 may be composed of various keys etc. such as a numeral/character input key, a cursor key that moves a cursor for selecting a displayed content, and an enter key for deciding on a selection.

The GPS 40 receives radio waves generated by artificial satellites to detect the current position of the communication terminal 7 (i.e. the user 6) and the current time. Besides the GPS 40, a device (such as a gyro sensor, for example) that detects the current position of the communication terminal 7 and the orientation may be provided.

The transmission/reception circuit section 33 is configured to be communicable with the posted text management center 2 via the communication network 8. The transmission/reception circuit section 33 can acquire traffic information such as congestion information, restriction information, and traffic accident information via an external traffic information center (e.g. a VICS (registered trademark) center) (not illustrated). The transmission/reception circuit section 33 is also used to transmit a viewing request for a posted text to the posted text management center 2, and to receive information related to an extracted posted text from the posted text management center 2.

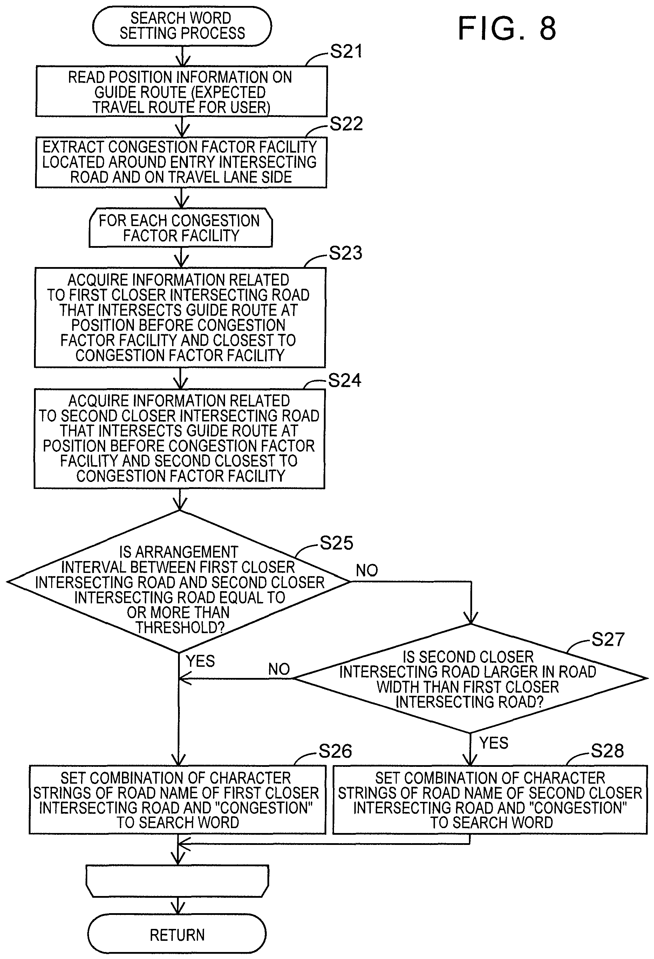

Subsequently, a posted text search process program executed by the communication terminal 7 and the posted text search server 3 which compose the posted text search system 1 configured as described above will be described with reference to FIG. 6. FIG. 6 is a flowchart of the posted text search process program according to the first embodiment. The posted text search process program is a program executed after the navigation application is started in the communication terminal 7 to extract a posted text that includes a content associated with the user 6 who demands to view the posted text from texts posted on the computer network, and to provide information related to the extracted posted text to the user 6. The program illustrated in the flowchart of FIGS. 6 and 8 described below is stored in the RAM or the ROM of the posted text management center 2 or the communication terminal 7, and executed by the CPU 21 or the CPU 31.

First, the posted text search process program which is executed by the communication terminal 7 will be described.

In step (hereinafter abbreviated as "S") 1, the CPU 31 determines whether or not an operation for setting a destination location has been performed in the navigation application.

In the case where it is determined that an operation for setting a destination location has been performed (S1: YES), the process proceeds to S2. In the case where it is determined that an operation for setting a destination location has not been performed (S 1: NO), in contrast, the posted text search process program is ended.

In S2, the CPU 31 acquires a guide route from a departure location to the set destination location. The acquired guide route is stored in the memory 32 etc. The exploration for the guide route may be made by the communication terminal 7, or may be made by an external server so that the communication terminal 7 receives the explored guide route from the server. A Dijkstra's algorithm known in the art is used in the exploration for the guide route. The departure location may be the current position of the user, or may be a desired location (e.g. home) selected by the user. The guide route acquired in S2 is the expected travel route for the user 6 (in the case where the user 6 is on board a vehicle, the vehicle). The guide route is acquired and stored as position information composed of numerical values. Specifically, the guide route is specified as a string of coordinate (latitude and longitude) points from the departure location to the destination location.

In S3, the CPU 31 transmits a viewing request for a posted text to the posted text search server 3. The viewing request for a posted text includes an ID that specifies the communication terminal 7 as the sender of the viewing request, and position information on the guide route acquired in S2. As discussed later, the posted text search server 3 which receives the viewing request extracts a "posted text that includes a content associated with the user 6 who demands to view the posted text" from texts posted on the computer network on the basis of the received viewing request (S12 to S14).

Next, in S4, the CPU 31 receives information related to a posted text transmitted from the posted text management center 2. Information related to the posted text received in S4 is information related to the posted text extracted from the texts posted on the computer network on the basis of the viewing request transmitted in S3, and information related to the "posted text that includes a content associated with the user 6 who demands to view the posted text". Information on a posted text includes the posting time when the text is posted, the posting position, the ID of the posting person, and so forth in addition to the sentence in the posted text.

After that, in S5, the CPU 31 causes the display 38 to display the information related to the posted text received in S4 together with the guide route acquired in S2. The information to be displayed may include all the sentences in the posted text, the posting time when the text is posted, the posting position, and the ID of the posting person, or may include only some of such items. It should be noted, however, that at least the sentence in the posted text is included. In the case where a posted text cannot be received in S4, only the guide route acquired in S2 is displayed.

FIG. 7 illustrates a posted text guide screen 51 displayed on the display 38 in S5. As illustrated in FIG. 7, the posted text guide screen 51 is composed of two display regions, namely a left screen 52 that displays the guide route and a right screen 53 that displays the information related to the posted text.

The left screen 52 is composed of a map image 54 around the user, a current position mark 55 that indicates the current position of the user, a guide route 56, and posting position marks 57 to 60 that indicate the posting positions of the displayed posted texts.

The right screen 53 is provided with information display spaces 61 to 64 for displaying information related to a posted text. The ID of the posting person who posted the text and the content of a sentence in the posted text are displayed in the information display spaces 61 to 64. In the case where there are a large number of posted texts, it is desirable that the posted texts are displayed switchably through a scroll operation. When displaying information related to the posted texts, a text that was posted at a position close to the user may be displayed preferentially. A posted text determined to have a high degree of matching with a search word in the search process (S13) to be discussed later may be displayed preferentially. Only the left screen 52 may be displayed without displaying the right screen 53 so that, after a selection is made from the posting position marks 57 to 60 on the left screen 52, one or more of the information display spaces 61 to 64 for the corresponding posted text are newly disposed on the screen. The posting position marks 57 to 60 may be not displayed.

The user can view the content of a posted text that includes a content associated with the user 6 by visually recognizing the posted text guide screen 51 illustrated in FIG. 7. In the first embodiment, in particular, in the case where a congestion factor facility is located around the guide route as discussed later, the name of an intersecting road that intersects the guide route on the closer side of the congestion factor facility is set to a search word, and thus congestion information associated with the guide route (more specifically, congestion information on the intersecting road which affects a flow of vehicles along the guide route) can be grasped at an earlier timing.

Next, the posted text search process program which is executed by the posted text search server 3 will be described.

First, in S11, the CPU 21 receives the viewing request transmitted from the user 6 who demands to view a posted text. The viewing request includes an ID that specifies the communication terminal 7 as the sender of the viewing request, and position information on the guide route (expected travel route for the user 6) set in the communication terminal 7. The position information on the guide route included in the received viewing request is temporarily stored in a storage medium such as the RAM 22.

Next, in S12, the CPU 21 executes a search word setting process (FIG. 8) to be discussed later. The search word setting process is a process for setting a search word for searching for a "posted text that includes a content associated with the user 6 who demands to view the posted text" from texts posted on the computer network on the basis of the position information on the guide route included in the viewing request received in S11 and the map information which includes information related to the congestion factor facilities and the shape of roads in the neighborhood.

After that, in S13, the CPU 21 executes a search process for searching for a "posted text that includes a content associated with the user 6 who demands to view the posted text" from texts posted on the computer network using the search word set in S12. Specifically, the CPU 21 extracts information related to a posted text that includes a sentence including the search word set in S12 from posted text information (FIG. 3) stored in the posted text information DB 9 of the posted text information management server 4.

For example, in the case where a combination of "ox Street" and "congestion" is set as a search word in S13, "congestion AND ox Street" is set as a search condition, and information related to a posted text that includes both character strings "ox Street" and "congestion" is extracted from the posted text information DB 9.

After that, in S14, the CPU 21 transmits the information related to the posted text extracted in S 13 to the communication terminal 7 which demanded to view the posted text. As a result, information related to a posted text that includes a content associated with the user 6 is displayed in the communication terminal 7 which demanded to view the posted text (S5).

Next, a sub process of the search word setting process executed in S12 will be described with reference to FIG. 8. FIG. 8 is a flowchart of the sub process program of the search word setting process according to the first embodiment.

First, in S21, the CPU 21 reads, from the RAM 22, position information on the guide route (expected travel route for the user) included in the viewing request received in S 11.

Next, in S22, the CPU 21 extracts, on the basis of the facility data 27 (FIG. 4), a congestion factor facility located around the guide route and located on the side of a lane with respect to the guide route, the lane in which the vehicle travels along the guide route.

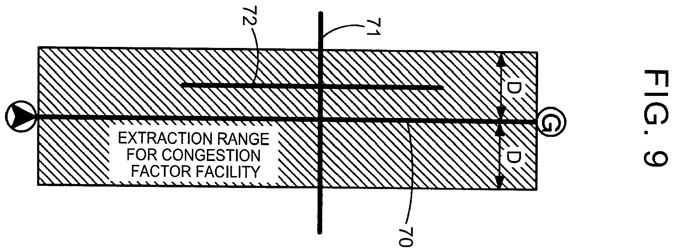

As described above, the congestion factor facility is a facility that may cause congestion on a road in the neighborhood because of the facility, and more specifically a facility that may cause congestion on a road in the neighborhood because of vehicles that enter the facility. Examples of the congestion factor facility include a large-scale commercial facility that attracts many people and a facility that was just introduced in the media such as TV and a magazine. Whether a facility located around the guide route is a congestion factor facility or a facility other than a congestion factor facility is specified in accordance with the facility data 27. It is desirable that a congestion factor facility located around the guide route should include not only a congestion factor facility located along the guide route but also a congestion factor facility located along a road that intersects the guide route and a congestion factor facility located along a road that extends in parallel with the guide route. For example, as illustrated in FIG. 9, not only a congestion factor facility located along a guide route 70 but also a congestion factor facility located along a road 71 that intersects the guide route 70 and a congestion factor facility located along a road 72 that extends in parallel with the guide route 70 are to be extracted. It should be noted, however, that there may be a condition that a congestion factor facility is located within a predetermined distance D (e.g. 100 m) from the guide route 70.

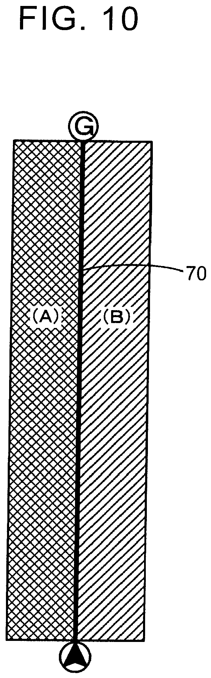

The side of a lane with respect to the guide route, the lane in which the vehicle travels along the guide route is the left side in the travel direction with respect to the guide route in an area with left-hand traffic, and the right side in the travel direction with respect to the guide route in an area with right-hand traffic. For example, in the case where the guide route 70 is positioned as illustrated in FIG. 10, a congestion factor facility located in a region A is extracted in the area with left-hand traffic, and a congestion factor facility located in a region B is extracted in the area with right-hand traffic. It should be noted, however, that in the case where the guide route 70 is a road with one-way traffic, both the region A and the region B are on the side of a lane in which the vehicle travels along the guide route 70, and a congestion factor facility is extracted from both the regions.

The processes in S23 to S28 described below are executed for each of the congestion factor facilities extracted in S22. After the processes in S23 to S28 are executed for all the congestion factor facilities extracted in S22, the process proceeds to S13.

In S23, the CPU 21 specifies, on the basis of the position of the congestion factor facility extracted in S22 and the link data 25 stored in the map information DB 12, a road that intersects the guide route on the side closest to the congestion factor facility, among roads that are located on the user side (i.e. the side of the start point of the guide route) with respect to the congestion factor facility and that intersect the guide route, as a first closer intersecting road, and acquires information (such as the link ID of a link that composes the intersecting road, the road type, the road width, and the road name) related to the specified first closer intersecting road.

Next, in S24, the CPU 21 specifies, also on the basis of the position of the congestion factor facility extracted in S22 and the link data 25 stored in the map information DB 12, a road that intersects the guide route on the side closest to the congestion factor facility next to the first closer intersecting road, among roads that are located on the user side (i.e. the side of the start point of the guide route) with respect to the congestion factor facility and that intersect the guide route, as a second closer intersecting road, and acquires information (such as the link ID of a link that composes the intersecting road, the road type, the road width, and the road name) related to the specified second closer intersecting road.

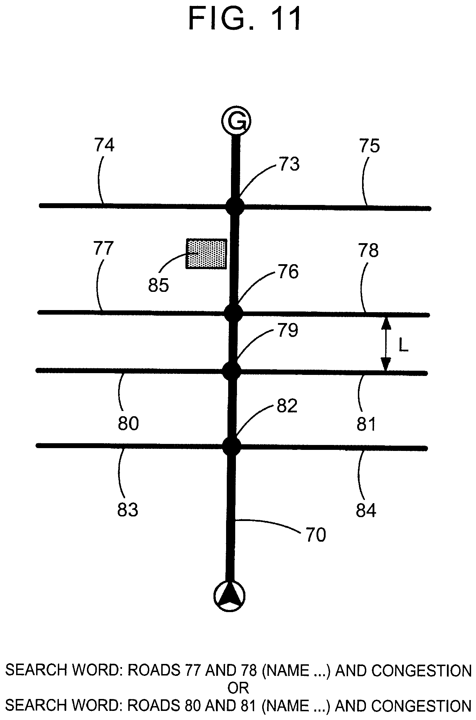

The processes in S23 and S24 will be described in more detail below with reference to FIG. 11.

In FIG. 11, intersecting roads 74 and 75 are connected to the guide route 70 at an intersection 73; intersecting roads 77 and 78 are connected to the guide route 70 at an intersection 76; intersecting roads 80 and 81 are connected to the guide route 70 at an intersection 79; intersecting roads 83 and 84 are connected to the guide route 70 at an intersection 82; and a congestion factor facility 85 extracted in S22 is located along the guide route 70 between the intersection 76 and the intersection 73. In the example illustrated in FIG. 11, the intersecting roads 77 and 78 which intersect the guide route 70 on the side closest to the congestion factor facility 85, among the intersecting roads 77, 78, 80, 81, 83, and 84 which are located on the user side with respect to the congestion factor facility 85, are specified as the first closer intersecting road. Meanwhile, the intersecting roads 80 and 81 which intersect the guide route 70 on the side closest to the congestion factor facility 85 next to the first closer intersecting road, among the intersecting roads 77, 78, 80, 81, 83, and 84 which are located on the user side with respect to the congestion factor facility 85, are specified as the second closer intersecting road.

There may be a condition that the first closer intersecting road and the second closer intersecting road are specified as roads with a predetermined width or more (e.g. a width of a general road or more) in order to exclude narrow streets.

Next, in S25, the CPU 21 specifies the arrangement interval between the first closer intersecting road and the second closer intersecting road on the basis of the information related to the first closer intersecting road acquired in S23 and the information related to the second closer intersecting road acquired in S24, and determines whether or not the arrangement interval is equal to or more than a predetermined threshold. For example, in the example illustrated in FIG. 11, it is determined whether or not an arrangement interval L between the intersecting roads 77 and 78 and the intersecting roads 80 and 81 is equal to or more than a threshold. The threshold used as the determination criterion in S25 is stored in a storage medium such as the RAM 22, and set as appropriate on the basis of the scale of the congestion factor facility, the guide route, the road type of the first closer intersecting road and the second closer intersecting road, etc. For example, the threshold may be 500 m. The threshold may be changeable in accordance with the scale of the congestion factor facility. For example, the threshold may be changed to a larger value as the scale of the congestion factor facility is larger.

In the case where it is determined that the arrangement interval between the first closer intersecting road and the second closer intersecting road is equal to or more than the threshold (S25: YES), the process proceeds to S26. In this case, the CPU 21 predicts that it is highly likely that the first closer intersecting road is congested because of vehicles heading for the congestion factor facility.

In the case where it is determined that the arrangement interval between the first closer intersecting road and the second closer intersecting road is not equal to or more than the threshold (S25: NO), in contrast, the process proceeds to S27.

In S26, the CPU 21 acquires the name of the first closer intersecting road as a search target name. Then, a combination of a character string of the acquired name of the first closer intersecting road and a character string "congestion" is set as a search word. For example, in the example illustrated in FIG. 11, the name of the intersecting roads 77 and 78 is acquired as a search target name. Thus, a combination of "name of the intersecting roads 77 and 78" and "congestion" is set as a search word. The name of the entry intersecting road may be a number (e.g. Route 1) in the case where the entry intersecting road is a national road or a prefectural road, may be the name (e.g. Meiji Dori) of the street, or may be an abbreviated name (e.g. Kannana).

After that, a search process for searching for a posted text that includes the search word from texts posted on the computer network on the basis of the set search word is executed (S 13).

In S27, meanwhile, the CPU 21 determines, on the basis of the information related to the first closer intersecting road acquired in S23 and the information related to the second closer intersecting road acquired in S24, whether or not the road width of the second closer intersecting road is larger than the road width of the first closer intersecting road. For example, in the example illustrated in FIG. 11, it is determined whether or not the road width of the intersecting roads 80 and 81 is larger than the road width of the intersecting roads 77 and 78.

In the case where it is determined that the road width of the second closer intersecting road is larger than the road width of the first closer intersecting road (S27: YES), the process proceeds to S28. In this case, the CPU 21 predicts that it is highly likely that the second closer intersecting road, which is larger in road width than the first closer intersecting road, is congested with many vehicles heading for the congestion factor facility.

In the case where it is determined that the road width of the second closer intersecting road is smaller than or the same as the road width of the first closer intersecting road (S27: NO), in contrast, the process proceeds to S26. In this case, the CPU 21 predicts that it is highly likely that the first closer intersecting road, which is closer to the congestion factor facility, is congested with many vehicles heading for the congestion factor facility.

In S28, the CPU 21 acquires the name of the second closer intersecting road as a search target name. Then, a combination of a character string of the acquired name of the second closer intersecting road and a character string "congestion" is set as a search word. For example, in the example illustrated in FIG. 11, the name of the intersecting roads 80 and 81 is acquired as a search target name. Thus, a combination of "name of the intersecting roads 80 and 81" and "congestion" is set as a search word.

In the posted text search system 1 according to the first embodiment, the posted text search method performed by the posted text search system 1, and the computer program executed in the posted text search system 1, as has been described above, in the case where a guide route is set in the communication terminal 7, a viewing request for a posted text is transmitted to the posted text search server 3 (S3); the posted text search server 3 which has received the viewing request determines whether or not a congestion factor facility, which is a facility that causes congestion, is located around the guide route; in the case where it is determined that a congestion factor facility is located around the guide route, a first closer intersecting road and a second closer intersecting road, which are roads that are located on the user side with respect to the congestion factor facility and that intersect the guide route, are acquired (S23 and S24); a combination of "name of the first closer intersecting road or the second closer intersecting road" and "congestion" is set to a search word (S26 and S28); a search is made for a posted text that includes the set search word from texts posted on the computer network (S 13); and the retrieved posted text is provided (S14). Thus, it is possible to set the name of an intersecting road that is highly likely to be congested, among intersecting roads that intersect the expected travel route for the user, to a search word on the basis of the facility which causes congestion and the shape of roads in the neighborhood. As a result, it is possible to appropriately extract only a posted text that includes information required by the user from texts posted on a computer network using the set search word. In particular, it is possible to grasp congestion information associated with the expected travel route for the user, more specifically congestion information on an intersecting road that affects a flow of vehicles along the expected travel route, at an earlier timing via the posted text. Also, it is not necessary for the user to input a search condition, which enables an improvement in operability.

### [Second Embodiment]

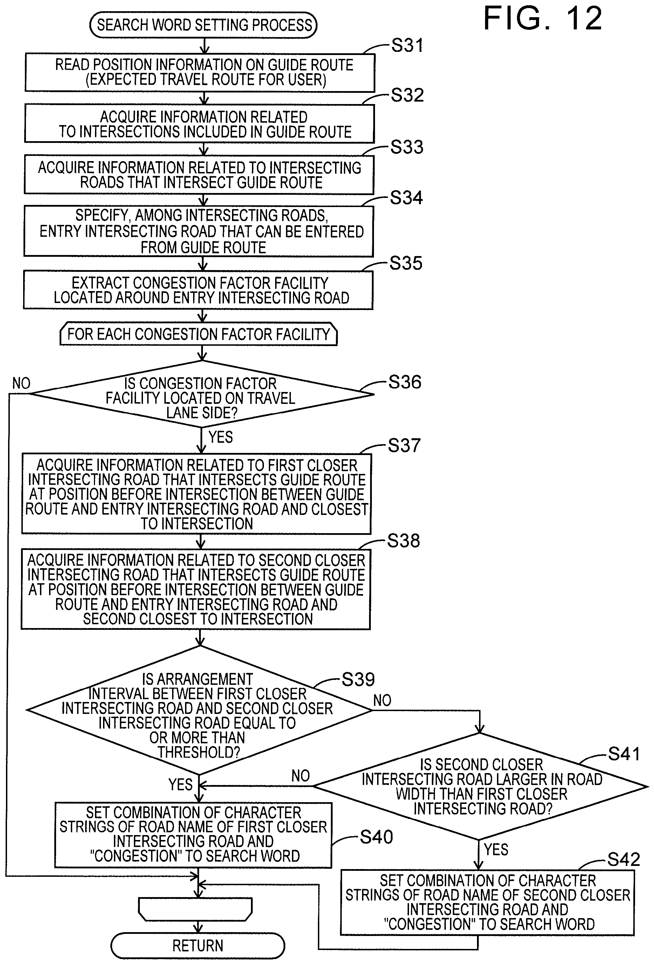

Next, a posted text search system according to a second embodiment will be described with reference to FIGS. 12 to 17. In the following description, symbols that are identical to those of the components of the posted text search system 1 according to the first embodiment of FIGS. 1 to 11 indicate portions that are identical or equivalent to the components of the posted text search system 1 according to the first embodiment etc.

The schematic configuration of the posted text search system according to the second embodiment is substantially the same as the configuration of the posted text search system 1 according to the first embodiment. Various control processes are also substantially the same as the control processes of the posted text search system 1 according to the first embodiment.

It should be noted, however, that the posted text search system according to the second embodiment is different from the posted text search system 1 according to the first embodiment in that the name of an intersecting road that intersects the guide route and that is located on the closer side with respect to an intersecting road around which a congestion factor facility is located is set to a search word, although the name of an intersecting road located on the closer side with respect to a congestion factor facility located around the guide route is set to a search word in the posted text search system 1 according to the first embodiment.

A sub process of the search word setting process in S12, of a posted text search process program executed by the communication terminal 7 and the posted text search server 3 according to the second embodiment, will be described with reference to FIG. 12. FIG. 12 is a flowchart of the sub process program of the search word setting process according to the second embodiment.

First, in S31, the CPU 21 reads, from the RAM 22, position information on the guide route (expected travel route for the user) included in the viewing request received in S 11.

Next, in S32, the CPU 21 specifies, on the basis of the position information on the guide route read in S31 and the intersection data 26 stored in the map information DB 12, an intersection included in the guide route, and acquires information related to the specified intersection (such as a node ID of a node that constitutes the intersection and an intersection name).

Subsequently, in S33, the CPU 21 specifies, on the basis of the position information on the guide route read in S31 and the link data 25 stored in the map information DB 12, an intersecting road that intersects the guide route at the intersection specified in S32, and acquires information related to the specified intersecting road (such as a link ID of a link that constitutes the intersecting road, a road type, a road width, and a road name).

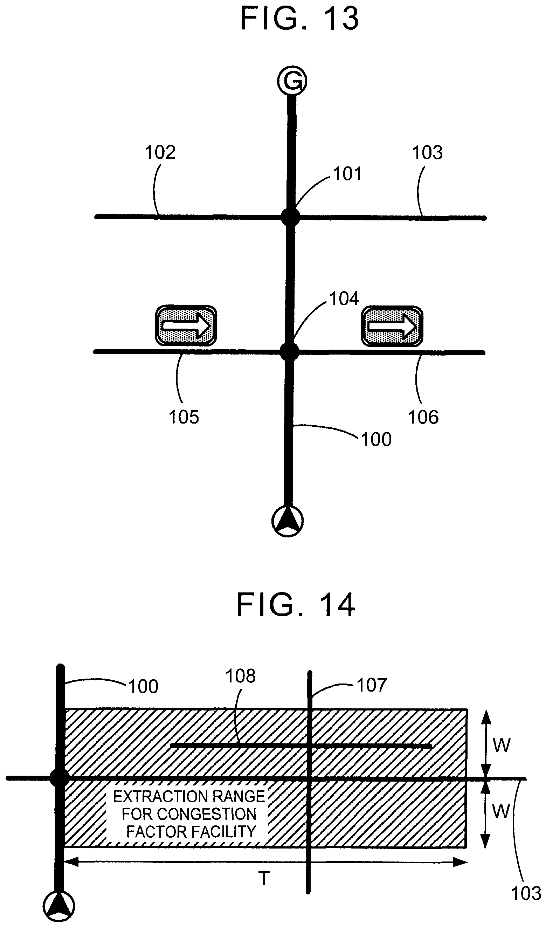

After that, in S34, the CPU 21 specifies, on the basis of the intersection data 26 and the link data 25, an entry intersecting road, which is a road that a vehicle traveling along the guide route can enter from the guide route, from the intersecting roads specified in S33. For example, as illustrated in FIG. 13, intersecting roads 102 and 103 are connected to the guide route 100 at an intersection 101, and intersecting roads 105 and 106 are connected to the guide route 100 at an intersection 104. In the example illustrated in FIG. 13, there is a one-way traffic restriction for the intersecting roads 105 and 106, while there is no restriction on the travel direction for the intersecting roads 102 and 103. Thus, a vehicle traveling along the guide route 100 can enter the intersecting roads 102, 103, and 106, but cannot enter the intersecting road 105. Thus, the intersecting roads 102, 103, and 106 are specified as an entry intersecting road. In S34, an entry intersecting road is specified also in consideration of no-vehicle-entry and pedestrians-only restrictions, for example, besides the one-way-traffic restriction.

Next, in S35, the CPU 21 extracts, on the basis of the facility data 27 (FIG. 4), a congestion factor facility located around the entry intersecting road specified in S34. In particular, in the case where a plurality of entry intersecting roads are specified in S34, the process in S35 is executed for each of the specified entry intersecting roads.

It is desirable that a congestion factor facility located around the entry intersecting road should include not only a congestion factor facility located along the entry intersecting road but also a congestion factor facility located along a road that intersects the entry intersecting road and a congestion factor facility located along a road that extends in parallel with the entry intersecting road. For example, as illustrated in FIG. 14, not only a congestion factor facility located along the entry intersecting road 103 but also a congestion factor facility located along a road 107 that intersects the entry intersecting road 103 and a congestion factor facility located along a road 108 that extends in parallel with the entry intersecting road 103 are to be extracted. It should be noted, however, that there may be a condition that a congestion factor facility is located within a predetermined distance W (e.g. 100 m) from the entry intersecting road 103.

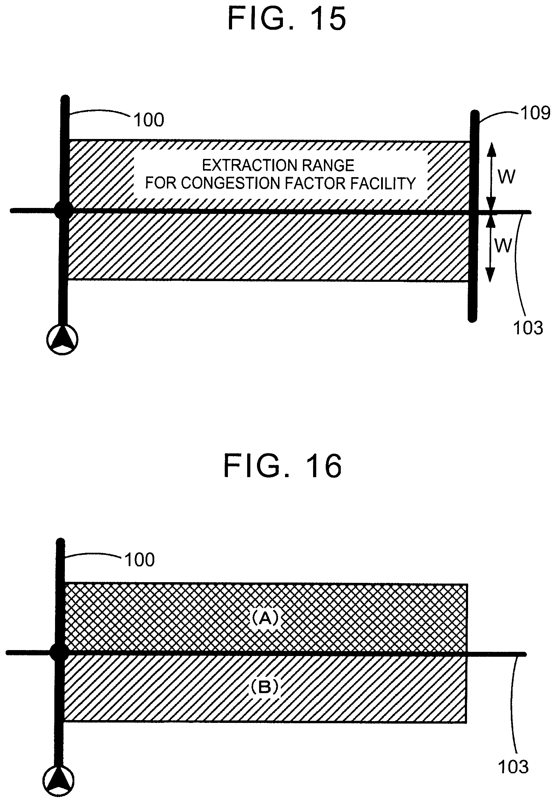

Further, it is desirable that there should be a condition that the congestion factor facility to be extracted in S35 is not significantly located away from the guide route. For example, there may be a condition that the congestion factor facility is located within a predetermined distance T (e.g. 1 km) from the guide route 100 as illustrated in FIG. 14, or there may be a condition that the congestion factor facility is located within a range from the guide route 100 to a road 109 with a predetermined width or more (a width of a general road or more) that the entry intersecting road 103 intersects, as illustrated in FIG. 15. Alternatively, there may not be a condition that the road 109 has the predetermined width or more.

The processes in S36 to S42 described below are executed for each of the congestion factor facilities extracted in S35. After the processes in S36 to S42 are executed for all the congestion factor facilities extracted in S35, the process proceeds to S13.

In S36, the CPU 21 compares the position of the congestion factor facility extracted in S35 and the position of the entry intersecting road to determine whether or not the congestion factor facility is located on the side of a lane with respect to the entry intersecting road, the lane in which a vehicle that has entered the entry intersecting road from the guide route travels. That is, it is determined whether or not the congestion factor facility is located on the left side with respect to the entry intersecting road as seen from the guide route side in an area with left-hand traffic, and it is determined whether or not the congestion factor facility is located on the right side with respect to the entry intersecting road as seen from the guide route side in an area with right-hand traffic. For example, in the case where the guide route 100 and the entry intersecting road 103 are positioned as illustrated in FIG. 16, it is determined whether or not the congestion factor facility is located in a region A in the area with left-hand traffic, and it is determined whether or not the congestion factor facility is located in a region B in the area with right-hand traffic. It should be noted, however, that in the case where the entry intersecting road 103 is a road with one-way traffic, it is determined that the congestion factor facility is located on the side of the lane in which the vehicle travels no matter in which of the region A and the region B the congestion factor facility is located.

In the case where it is determined that the congestion factor facility is located on the side of a lane with respect to the entry intersecting road, the lane in which a vehicle that has entered the entry intersecting road from the guide route travels (S36: YES), the process proceeds to S37. In the case where it is determined that the congestion factor facility is not located on the side of a lane with respect to the entry intersecting road, the lane in which a vehicle that has entered the entry intersecting road from the guide route travels (S36: NO), in contrast, the process returns to S36 without setting a search word, and the process is continued for the next congestion factor facility.

In S37, the CPU 21 specifies, on the basis of the position of the entry intersecting road for which it is determined in S36 that the congestion factor facility is located on the side of the travel lane for the vehicle and the link data 25 stored in the map information DB 12, a road that intersects the guide route on the side closest to an intersection (hereinafter referred to as an "entry intersection") between the guide route and the entry intersecting road, among roads that are located on the user side (i.e. the side of the start point of the guide route) with respect to the entry intersection and that intersect the guide route, as a first closer intersecting road, and acquires information (such as the link ID of a link that composes the intersecting road, the road type, the road width, and the road name) related to the specified first closer intersecting road.

Next, in S38, the CPU 21 specifies, also on the basis of the position of the entry intersecting road for which it is determined in S36 that the congestion factor facility is located on the side of the travel lane for the vehicle and the link data 25 stored in the map information DB 12, a road that intersects the guide route on the side closest to the entry intersection next to the first closer intersecting road, among roads that are located on the user side (i.e. the side of the start point of the guide route) with respect to the entry intersection and that intersect the guide route, as a second closer intersecting road, and acquires information (such as the link ID of a link that composes the intersecting road, the road type, the road width, and the road name) related to the specified second closer intersecting road.

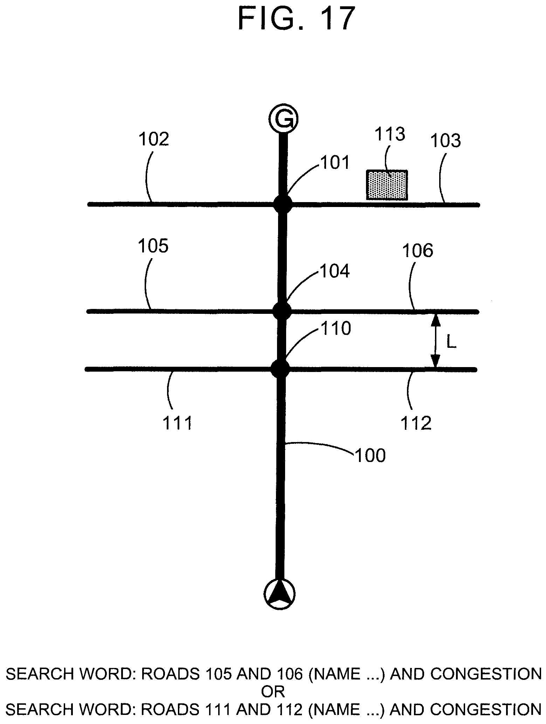

The processes in S37 and S38 will be described in more detail below with reference to FIG. 17.

In FIG. 17, intersecting roads 102 and 103 are connected to the guide route 100 at an intersection 101; intersecting roads 105 and 106 are connected to the guide route 100 at an intersection 104; intersecting roads 111 and 112 are connected to the guide route 100 at an intersection 110; and a congestion factor facility 113 extracted in S35 is located along the intersecting road 103 which is an entry intersecting road. In the example illustrated in FIG. 17, the intersecting roads 105 and 106 which intersect the guide route 100 on the side closest to the entry intersection 101, among the intersecting roads 105, 106, 111, and 112 which are located on the user side with respect to the entry intersection 101, are specified as the first closer intersecting road. Meanwhile, the intersecting roads 111 and 112 which intersect the guide route 100 on the side closest to the entry intersection 101 next to the first closer intersecting road, among the intersecting roads 105, 106, 111, and 112 which are located on the user side with respect to the entry intersection 101, are specified as the second closer intersecting road.

There may be a condition that the first closer intersecting road and the second closer intersecting road are specified as roads with a predetermined width or more (e.g. a width of a general road or more) in order to exclude narrow streets.

Next, in S39, the CPU 21 specifies the arrangement interval between the first closer intersecting road and the second closer intersecting road on the basis of the information related to the first closer intersecting road acquired in S37 and the information related to the second closer intersecting road acquired in S38, and determines whether or not the arrangement interval is equal to or more than a predetermined threshold. For example, in the example illustrated in FIG. 17, it is determined whether or not an arrangement interval L between the intersecting roads 105 and 106 and the intersecting roads 111 and 112 is equal to or more than a threshold. The threshold used as the determination criterion in S39 is stored in a storage medium such as the RAM 22, and set as appropriate on the basis of the scale of the congestion factor facility, the guide route, the road type of the first closer intersecting road and the second closer intersecting road, etc. For example, the threshold may be 500 m. The threshold may be changeable in accordance with the scale of the congestion factor facility. For example, the threshold may be changed to a larger value as the scale of the congestion factor facility is larger.

In the case where it is determined that the arrangement interval between the first closer intersecting road and the second closer intersecting road is equal to or more than the threshold (S39: YES), the process proceeds to S40. In this case, the CPU 21 predicts that it is highly likely that the first closer intersecting road is congested because of vehicles heading for the congestion factor facility by way of the guide route.

In the case where it is determined that the arrangement interval between the first closer intersecting road and the second closer intersecting road is not equal to or more than the threshold (S39: NO), in contrast, the process proceeds to S41.

In S40, the CPU 21 acquires the name of the first closer intersecting road as a search target name. Then, a combination of a character string of the acquired name of the first closer intersecting road and a character string "congestion" is set as a search word. For example, in the example illustrated in FIG. 17, the name of the intersecting roads 105 and 106 is acquired as a search target name. Thus, a combination of "name of the intersecting roads 105 and 106" and "congestion" is set as a search word. The name of the entry intersecting road may be a number (e.g. Route 1) in the case where the entry intersecting road is a national road or a prefectural road, may be the name (e.g. Meiji Dori) of the street, or may be an abbreviated name (e.g. Kannana).

After that, a search process for searching for a posted text that includes the search word from texts posted on the computer network on the basis of the set search word is executed (S 13).

In S41, meanwhile, the CPU 21 determines, on the basis of the information related to the first closer intersecting road acquired in S37 and the information related to the second closer intersecting road acquired in S38, whether or not the road width of the second closer intersecting road is larger than the road width of the first closer intersecting road. For example, in the example illustrated in FIG. 17, it is determined whether or not the road width of the intersecting roads 111 and 112 is larger than the road width of the intersecting roads 105 and 106.

In the case where it is determined that the road width of the second closer intersecting road is larger than the road width of the first closer intersecting road (S41: YES), the process proceeds to S42. In this case, the CPU 21 predicts that it is highly likely that the second closer intersecting road, which is larger in road width than the first closer intersecting road, is congested with many vehicles heading for the congestion factor facility by way of the guide route.

In the case where it is determined that the road width of the second closer intersecting road is smaller than or the same as the road width of the first closer intersecting road (S41: NO), in contrast, the process proceeds to S40. In this case, the CPU 21 predicts that it is highly likely that the first closer intersecting road, which is closer to the congestion factor facility, is congested with many vehicles heading for the congestion factor facility by way of the guide route.

In S42, the CPU 21 acquires the name of the second closer intersecting road as a search target name. Then, a combination of a character string of the acquired name of the second closer intersecting road and a character string "congestion" is set as a search word. For example, in the example illustrated in FIG. 17, the name of the intersecting roads 111 and 112 is acquired as a search target name. Thus, a combination of "name of the intersecting roads 111 and 112" and "congestion" is set as a search word.

In the posted text search system according to the second embodiment, the posted text search method performed by the posted text search system, and the computer program executed in the posted text search system 1, as has been described above, in the case where a guide route is set in the communication terminal 7, a viewing request for a posted text is transmitted to the posted text search server 3 (S3); the posted text search server 3 which has received the viewing request acquires an entry intersecting road which is a road that intersects the guide route and that a vehicle traveling along the guide route can enter from the guide route (S34); it is determined whether or not a congestion factor facility which is a facility that causes congestion is located around the entry intersecting road (S36); in the case where it is determined that a congestion factor facility is located around the entry intersecting road, a first closer intersecting road and a second closer intersecting road, which are roads that are located on the user side with respect to the entry intersection and that intersect the guide route, are acquired (S37 and S38); a combination of "name of the first closer intersecting road or the second closer intersecting road" and "congestion" is set to a search word (S40 and S42); a search is made for a posted text that includes the set search word from texts posted on the computer network (S13); and the retrieved posted text is provided (S14). Thus, it is possible to set the name of an intersecting road that is highly likely to be congested, among intersecting roads that intersect the expected travel route for the user, to a search word on the basis of the facility which causes congestion and the road shape of roads in the neighborhood. As a result, it is possible to appropriately extract only a posted text that includes information required by the user from texts posted on a computer network using the set search word. In particular, it is possible to grasp congestion information associated with the expected travel route for the user, more specifically congestion information on an intersecting road that affects a flow of vehicles along the expected travel route, at an earlier timing via the posted text. It is not necessary for the user to input a search condition, which enables an improvement in operability.

It should be understood that the present invention is not limited to the embodiments described above, and that various improvements and modifications may be made without departing from the scope and spirit of the present invention.

For example, the processes in S11 to S14 of the posted text search process program (FIG. 6) are executed by the posted text search server 3 in the first embodiment and the second embodiment. However, some or all of the processes may be executed by the posted text information management server 4 or the communication terminal 7.

In the first embodiment and the second embodiment, the guide route which is set by the communication terminal 7 which demanded to view a post is transmitted from the communication terminal 7 to the posted text search server 3 as the expected travel route for the user. However, the departure location and the destination location which are set in the communication terminal 7 may be transmitted in place of the guide route. In this case, the posted text search server 3 explores for a guide route on the basis of the received departure location and destination location. A route other than the guide route may be used as the expected travel route for the user. For example, a route assumed to be followed when the user moves along the way from the current position may be specified as the expected travel route for the user. Alternatively, the expected travel route for the user may be specified from a movement history of the user in the past. Further, the expected travel route may be an expected route of travel by vehicle, or may be an expected route of travel by movement means other than vehicle (such as by train, by bicycle, or on foot, for example).

In the first embodiment and the second embodiment, only one of a combination of "name of the first closer intersecting road" and "congestion" and a combination of "name of the second closer intersecting road" and "congestion" is set as a search word. However, both the combinations may be set as a search word. Further, a character string that indicates a traffic situation other than "congestion" (such as "heavy traffic", for example) may be set as a search word. The "name of the first closer intersecting road" may be replaced with the "name of an intersection between the guide route the first closer intersecting road" as a search word, and the "name of the second closer intersecting road" may be replaced with the "name of an intersection between the guide route and the second closer intersecting road".

In the first embodiment and the second embodiment, the posted text information management server 4 stores, as information related to a posted text, a sentence in the posted text, the posting time when the text is posted, position information on the posting person at the time when the text is posted, the ID of the posting person, and so forth. However, the posted text information management server 4 may store only a sentence in the posted text.

While posted text search systems according to specific embodiments of the present invention have been described above, the posted text search system may also be configured as described below, and the following effect can be achieved in such cases.

For example, a first configuration is as follows.

The closer intersecting road acquisition means acquires a road that intersects the expected travel route on the side closest to the congestion factor facility (or the intersection) as a first closer intersecting road, and acquires a road that intersects the expected travel route on the side closest to the congestion factor facility (or the intersection) next to the first closer intersecting road as a second closer intersecting road; and the search target name acquisition means acquires the name of at least one of the first closer intersecting road and the second closer intersecting road as the search target name.

With the posted text search system configured as described above, roads on which vehicles heading for the congestion factor facility by way of the expected travel route are highly likely to travel can be specified as the first closer intersecting road and the second closer intersecting road. Then, by including the road name of such roads in the search word, it is possible to appropriately extract a posted text that includes congestion information on an intersecting road that affects a flow of vehicles along the expected travel route.

A second configuration is as follows.

Interval acquisition means for acquiring the arrangement interval between the first closer intersecting road and the second closer intersecting road is provided; and the search target name acquisition means acquires the name of the first closer intersecting road as the search target name in the case where the arrangement interval between the first closer intersecting road and the second closer intersecting road is equal to or more than a threshold.

With the posted text search system configured as described above, in particular, the first closer intersecting road which is close to the congestion factor facility can be specified as a road on which vehicles heading for the congestion factor facility by way of the expected travel route are highly likely to travel. Then, by including the road name of the first closer intersecting road in the search word, it is possible to appropriately extract a posted text that includes congestion information on an intersecting road that affects a flow of vehicles along the expected travel route.

A third configuration is as follows.

Road width acquisition means for acquiring the road width of the first closer intersecting road and the road width of the second closer intersecting road is provided; and the search target name acquisition means acquires the name of one of the first closer intersecting road and the second closer intersecting road that has a larger road width as the search target name in the case where the arrangement interval between the first closer intersecting road and the second closer intersecting road is less than the threshold.

With the posted text search system configured as described above, in particular, one of the intersecting roads that has a larger road width, among the first closer intersecting road and the second closer intersecting road, can be specified as a road on which vehicles heading for the congestion factor facility by way of the expected travel route are highly likely to travel. Then, by including the road name of the intersecting road in the search word, it is possible to appropriately extract a posted text that includes congestion information on an intersecting road that affects a flow of vehicles along the expected travel route.

A fourth configuration is as follows.

The congestion facility determination means determines whether or not the congestion factor facility is located around the expected travel route (or the entry intersecting road) and on the side of a lane with respect to the expected travel route (or the entry intersecting road), the lane in which a vehicle travels along the expected travel route (or on the side of a lane in which a vehicle that has entered the entry intersecting road from the expected travel route travels).

With the posted text search system configured as described above, it is possible to appropriately extract a posted text that includes information related to congestion in the case where a lane for entry from the closer intersecting road into the congestion factor facility by way of the expected travel route is highly likely to be congested with vehicles that enter the congestion factor facility.

### Description of the Reference Numerals

- 1: POSTED TEXT SEARCH SYSTEM
- 2: POSTED TEXT MANAGEMENT CENTER
- 3: POSTED TEXT SEARCH SERVER
- 4: POSTED TEXT INFORMATION MANAGEMENT SERVER
- 6: USER
- 7: COMMUNICATION TERMINAL
- 27: FACILITY DATA

## Claims

1. A posted text search system (1) **characterized by** comprising:
expected travel route acquisition means (21) configured to acquire an expected travel route (70) for a mobile body;
congestion facility determination means (21) configured to determine whether or not a congestion factor facility (85), which is a facility that causes congestion, is located in the neighborhood of the expected travel route (70);
closer intersecting road acquisition means (21) configured to acquire, in the case where it is determined that the congestion factor facility (85) is located in the neighborhood of the expected travel route, a closer intersecting road (77, 78, 80, 81), which is a road that is located on the side of the mobile body with respect to the congestion factor facility (85) and that intersects the expected travel route (70);
search target name acquisition means (21) configured to acquire a name of the closer intersecting road (77, 78, 80, 81) as a search target name;
search condition setting means (21) configured to set a search word from a character string of the search target name acquired by the search target name acquisition means; and
search means (21) configured to extract a posted text that corresponds to the search word set by the search condition setting means from texts posted on a computer network.

2. The posted text search system according to claim 1, **characterized in that**:
the closer intersecting road acquisition means (21) is configured to acquire a road that intersects the expected travel route on a side closest to the congestion factor facility as a first closer intersecting road (77, 78), and to acquire a road that intersects the expected travel route on a side closest to the congestion factor facility next to the first closer intersecting road as a second closer intersecting road (80, 81); and
the search target name acquisition means (21) is configured to acquire a name of at least one of the first closer intersecting road (77, 78) and the second closer intersecting road (80, 81) as the search target name.

3. The posted text search system according to claim 2, **characterized by** further comprising:
interval acquisition means (21) configured to acquire an interval (L) between the first closer intersecting road (77, 78) and the second closer intersecting road (80, 81), wherein
the search target name acquisition means (21) is configured to acquire a name of the first closer intersecting road (77, 78) as the search target name in the case where the interval (L) between the first closer intersecting road (77, 78) and the second closer intersecting road (80, 81) is equal to or more than a threshold.

4. The posted text search system according to claim 3, **characterized by** further comprising:
road width acquisition means (21) configured to acquire a road width of the first closer intersecting road (77, 78) and a road width of the second closer intersecting road (80, 81), wherein
the search target name acquisition means (21) is configured to acquire a name of one of the first closer intersecting road (77, 78) and the second closer intersecting road (80, 81) that has a larger road width as the search target name in the case where the interval (L) between the first closer intersecting road and the second closer intersecting road is less than the threshold.

5. The posted text search system according to any one of claims 1 to 4, **characterized in that**
the congestion facility determination means (21) is configured to determine whether or not the congestion factor facility (85) is located in the neighborhood of the expected travel route (70) and on a side of a lane with respect to the expected travel route, the lane of which a vehicle travels along the expected travel route.

6. A posted text search system (1) **characterized by** comprising:
expected travel route acquisition means (21) configured to acquire an expected travel route (100) for a mobile body;
intersecting road acquisition means (21) configured to acquire an entry intersecting road (103), which is a road that intersects the expected travel route (100) and that a vehicle traveling along the expected travel route can enter from the expected travel route;
intersecting congestion facility determination means (21) configured to determine whether or not a congestion factor facility (113), which is a facility that causes congestion, is located in the neighborhood of the entry intersecting road (103);
closer intersecting road acquisition means (21) configured to acquire, in the case where it is determined that the congestion factor facility (113) is located in the neighborhood of the entry intersecting road (103), a closer intersecting road (105, 106, 111, 112), which is a road that is located on the side of the mobile body with respect to an intersection between the expected travel route (100) and the entry intersecting road (103) and that intersects the expected travel route;
search target name acquisition means (21) configured to acquire a name of the closer intersecting road (105, 106, 111, 112) as a search target name;
search condition setting means (21) configured to set a search word from a character string of the search target name acquired by the search target name acquisition means; and
search means (21) configured to extract a posted text that corresponds to the search word set by the search condition setting means from texts posted on a computer network.

7. The posted text search system according to claim 6, **characterized in that**:
the closer intersecting road acquisition means (21) is configured to acquire a road that intersects the expected travel route on a side closest to the intersection as a first closer intersecting road (105, 106), and to acquire a road that intersects the expected travel route on a side closest to the intersection next to the first closer intersecting road as a second closer intersecting road (111, 112); and
the search target name acquisition means (21) is configured to acquire a name of at least one of the first closer intersecting road (105, 106) and the second closer intersecting road (111, 112) as the search target name.

8. The posted text search system according to claim 7, **characterized by** further comprising:
interval acquisition means (21) configured to acquire an interval between the first closer intersecting road (105, 106) and the second closer intersecting road (111, 112), wherein
the search target name acquisition means (21) is configured to acquire a name of the first closer intersecting road (105, 106) as the search target name in the case where the interval (L) between the first closer intersecting road (105, 106) and the second closer intersecting road (111, 112) is equal to or more than a threshold.

9. The posted text search system according to claim 8, **characterized by** further comprising:
road width acquisition means (21) configured to acquire a road width of the first closer intersecting road (105, 106) and a road width of the second closer intersecting road (111, 112), wherein
the search target name acquisition means (21) is configured to acquire a name of one of the first closer intersecting road (105, 106) and the second closer intersecting road (111, 112) that has a larger road width as the search target name in the case where the interval between the first closer intersecting road and the second closer intersecting road is less than the threshold.

10. The posted text search system according to any one of claims 6 to 9, **characterized in that**
the intersecting congestion facility determination means (21) is configured to determine whether or not the congestion factor facility (113) is located in the neighborhood of the entry intersecting road (103) and on a side of a lane with respect to the entry intersecting road, the lane in which a vehicle that has entered the entry intersecting road from the expected travel route (100) travels.

11. A posted text search device **characterized by** comprising:
expected travel route acquisition means (21) configured to acquire an expected travel route (70) for a mobile body;
congestion facility determination means (21) configured to determine whether or not a congestion factor facility (85), which is a facility that causes congestion, is located in the neighborhood of the expected travel route;
closer intersecting road acquisition means (21) configured to acquire, in the case where it is determined that the congestion factor facility (85) is located in the neighborhood of the expected travel route, a closer intersecting road (77, 78, 80, 81), which is a road that is located on the side of the mobile body with respect to the congestion factor facility and that intersects the expected travel route (70);
search target name acquisition means (21) configured to acquire a name of the closer intersecting road (77, 78, 80, 81) as a search target name;
search condition setting means (21) configured to set a search word from a character string of the search target name acquired by the search target name acquisition means; and
search means (21) configured to extract a posted text that corresponds to the search word set by the search condition setting means from texts posted on a computer network.

12. A posted text search method **characterized by** comprising:
a step of expected travel route acquisition means (21) acquiring an expected travel route (70) for a mobile body;
a step of congestion facility determination means (21) determining whether or not a congestion factor facility (85), which is a facility that causes congestion, is located in the neighborhood of the expected travel route;
a step of closer intersecting road acquisition means (21) acquiring, in the case where it is determined that the congestion factor facility (85) is located in the neighborhood of the expected travel route, a closer intersecting road (77, 78, 80, 81), which is a road that is located on the side of the mobile body with respect to the congestion factor facility and that intersects the expected travel route (70);
a step of search target name acquisition means (21) acquiring a name of the closer intersecting road (77, 78, 80, 81) as a search target name;
a step of search condition setting means (21) setting a search word from a character string of the search target name acquired by the search target name acquisition means; and
a step of search means (21) extracting a posted text that corresponds to the search word set by the search condition setting means from texts posted on a computer network.

13. A computer program **characterized by** causing a computer to function as:
expected travel route acquisition means (21) configured to acquire an expected travel route (70) for a mobile body;
congestion facility determination means (21) configured to determine whether or not a congestion factor facility (85), which is a facility that causes congestion, is located around the expected travel route;
closer intersecting road acquisition means (21) configured to acquire, in the case where it is determined that the congestion factor facility (85) is located in the neighborhood of the expected travel route, a closer intersecting road (77, 78, 80, 81), which is a road that is located on the side of the mobile body with respect to the congestion factor facility (85) and that intersects the expected travel route (70);
search target name acquisition means (21) configured to acquire a name of the closer intersecting road (77, 78, 80, 81) as a search target name;
search condition setting means (21) configured to set a search word from a character string of the search target name acquired by the search target name acquisition means; and
search means (21) configured to extract a posted text that corresponds to the search word set by the search condition setting means from texts posted on a computer network.

## Patentansprüche

1. Texteintragsuchsystem (1), **gekennzeichnet durch**:
ein Erwartete-Fahrtroute-Erfassungsmittel (21), das zum Erfassen einer erwarteten Fahrtroute (70) für einen mobilen Körper ausgebildet ist;
ein Staueinrichtungsbestimmungsmittel (21), das zum Bestimmen, ob sich eine Staufaktoreinrichtung (85), die eine Einrichtung ist, die einen Stau bewirkt, in der Nachbarschaft der erwarteten Fahrtroute (70) befindet, ausgebildet ist;
ein Nähere-Kreuzungsstraße-Erfassungsmittel (21), das zum Erfassen einer näheren Kreuzungsstraße (77, 78, 80, 81), die eine Straße ist, die sich in Bezug auf die Staufaktoreinrichtung (85) auf der Seite des mobilen Körpers befindet und die die erwartete Fahrtroute (70) kreuzt, wenn bestimmt wird, dass sich die Staufaktoreinrichtung (85) in der Nachbarschaft der erwarteten Fahrtroute befindet, ausgebildet ist;
ein Suchzielnamenserfassungsmittel (21), das zum Erfassen eines Namens der näheren kreuzenden Straße (77, 78, 80, 81) als einen Suchzielnamen ausgebildet ist;
ein Suchbedingungseinstellmittel (21), das zum Einstellen eines Suchworts basierend auf einer Zeichenfolge des Suchzielnamens, der durch das Suchzielnamenserfassungsmittel erfasst wird, ausgebildet ist; und
ein Suchmittel (21), das zum Extrahieren eines Texteintrags, der dem durch das Suchbedingungseinstellmittel eingestellten Suchwort entspricht, aus Texteinträgen auf einem Computernetzwerk ausgebildet ist.

2. Texteintragsuchsystem nach Anspruch 1, **dadurch gekennzeichnet, dass**:
das Nähere-Kreuzungsstraße-Erfassungsmittel (21) zum Erfassen einer Straße, die die erwartete Fahrtroute auf einer Seite kreuzt, die der Staufaktoreinrichtung am nächsten ist, als eine erste nähere Kreuzungsstraße (77, 78) und zum Erfassen einer Straße, die die erwartete Fahrtroute auf einer Seite kreuzt, die der Staufaktoreinrichtung am nächsten ist, neben der ersten näheren Kreuzungsstraße als eine zweite nähere Kreuzungsstraße (80, 81) ausgebildet ist; und
das Suchzielnamenserfassungsmittel (21) zum Erfassen eines Namens mindestens einer der ersten näheren Kreuzungsstraße (77, 78) und der zweiten näheren Kreuzungsstraße (80, 81) als den Suchzielnamen ausgebildet ist.

3. Texteintragsuchsystem nach Anspruch 2, ferner **gekennzeichnet durch**:
ein Intervallerfassungsmittel (21), das zum Erfassen eines Intervalls (L) zwischen der ersten näheren Kreuzungsstraße (77, 78) und der zweiten näheren Kreuzungsstraße (80, 81) ausgebildet ist, wobei
das Suchzielnamenserfassungsmittel (21) zum Erfassen eines Namens der ersten näheren Kreuzungsstraße (77, 78) als den Suchzielnamen, wenn das Intervall (L) zwischen der ersten näheren Kreuzungsstraße (77, 78) und der zweiten näheren Kreuzungsstraße (80, 81) größer oder gleich einer Schwelle ist, ausgebildet ist.

4. Texteintragsuchsystem nach Anspruch 3, ferner **gekennzeichnet durch**:
ein Straßenbreitenerfassungsmittel (21), das zum Erfassen einer Straßenbreite der ersten näheren Kreuzungsstraße (77, 78) und einer Straßenbreite der zweiten näheren Kreuzungsstraße (80, 81) ausgebildet ist, wobei
das Suchzielnamenserfassungsmittel (21) zum Erfassen eines Namens einer der ersten näheren Kreuzungsstraße (77, 78) und der zweiten näheren Kreuzungsstraße (80, 81), die eine größere Straßenbreite hat, als den Suchzielnamen, wenn das Intervall (L) zwischen der ersten näheren Kreuzungsstraße und der zweiten näheren Kreuzungsstraße kleiner als die Schwelle ist, ausgebildet ist.

5. Texteintragsuchsystem nach einem der Ansprüche 1 bis 4, **dadurch gekennzeichnet, dass**
das Staueinrichtungsbestimmungsmittel (21) zum Bestimmen, ob sich die Staufaktoreinrichtung (85) in der Nachbarschaft der erwarteten Fahrtroute (70) und hinsichtlich der erwarteten Fahrtroute auf einer Seite einer Spur, in der ein Fahrzeug entlang der erwarteten Fahrtroute fährt, befindet, ausgebildet ist.

6. Texteintragssuchsystem (1), **gekennzeichnet durch**:
ein Erwartete-Fahrtroute-Erfassungsmittel (21), das zum Erfassen einer erwarteten Fahrtroute (100) für einen mobilen Körper ausgebildet ist;
ein Kreuzungsstraßenerfassungsmittel (21), das zum Erfassen einer Einfahrkreuzungsstraße (103), die eine Straße ist, die die erwartete Fahrtroute (100) kreuzt und in die ein Fahrzeug, das entlang der erwarteten Fahrtroute fährt, von der erwarteten Fahrtroute aus einfahren kann, ausgebildet ist;
ein Kreuzungsstaueinrichtungsbestimmungsmittel (21), das zum Bestimmen, ob sich eine Staufaktoreinrichtung (113), die eine Einrichtung ist, die einen Stau bewirkt, in der Nachbarschaft der Einfahrkreuzungsstraße (103) befindet, ausgebildet ist;
ein Nähere-Kreuzungsstraße-Erfassungsmittel (21), das zum Erfassen einer näheren Kreuzungsstraße (105, 106, 111, 112), die eine Straße ist, die sich in Bezug auf eine Kreuzung zwischen der erwarteten Fahrtroute (100) und der Einfahrkreuzungsstraße (103) auf der Seite des mobilen Körpers befindet und die die erwartete Fahrtroute kreuzt, wenn bestimmt wird, dass sich die Staufaktoreinrichtung (113) in der Nachbarschaft der Einfahrkreuzungsstraße (103) befindet, ausgebildet ist;
ein Suchzielnamenserfassungsmittel (21), das zum Erfassen des Namens der näheren Kreuzungsstraße (105, 106, 111, 112) als einen Suchzielnamen ausgebildet ist;
ein Suchbedingungseinstellmittel (21), das zum Einstellen eines Suchworts basierend auf einer Zeichenfolge des Suchzielnamens, die durch das Suchzielnamenserfassungsmittel erfasst wird, ausgebildet ist; und
ein Suchmittel (21), das zum Extrahieren eines Texteintrags, der dem durch das Suchbedingungseinstellmittel eingestellten Suchwort entspricht, aus Texteinträgen auf einem Computernetzwerk ausgebildet ist.

7. Texteintragsuchsystem nach Anspruch 6, **dadurch gekennzeichnet, dass**:
das Nähere-Kreuzungsstraßen-Erfassungsmittel (21) zum Erfassen einer Straße, die die erwartete Fahrtroute auf einer Seite kreuzt, die der Kreuzung am nächsten ist, als eine erste nähere Kreuzungsstraße (105, 106) und zum Erfassen einer Straße, die die erwartete Fahrtroute auf einer Seite kreuzt, die der Kreuzung am nächsten ist, neben der ersten näheren Kreuzungsstraße als eine zweite nähere Kreuzungsstraße (111, 112) ausgebildet ist; und
das Suchzielnamenserfassungsmittel (21) zum Erfassen eines Namens mindestens einer der ersten näheren Kreuzungsstraße (105, 106) und der zweiten näheren Kreuzungsstraße (111, 112) als den Suchzielnamen ausgebildet ist.

8. Texteintragsuchsystem nach Anspruch 7, ferner **gekennzeichnet durch**:
ein Intervallerfassungsmittel (21), das zum Erfassen eines Intervalls zwischen der ersten näheren Kreuzungsstraße (105, 106) und der zweiten näheren Kreuzungsstraße (111, 112) ausgebildet ist, wobei
das Suchzielnamenserfassungsmittel (21) zum Erfassen eines Namens der ersten näheren Kreuzungsstraße (105, 106) als den Suchzielnamen, wenn das Intervall (L) zwischen der ersten näheren Kreuzungsstraße (105, 106) und der zweiten näheren Kreuzungsstraße (111, 112) größer oder gleich einer Schwelle ist, ausgebildet ist.

9. Texteintragsuchsystem nach Anspruch 8, ferner **gekennzeichnet durch**:
ein Straßenbreitenerfassungsmittel (21), das zum Erfassen einer Straßenbreite der ersten näheren Kreuzungsstraße (105, 106) und einer Straßenbreite der zweiten näheren Kreuzungsstraße (111, 112) ausgebildet ist, wobei
das Suchzielnamenserfassungsmittel (21) zum Erfassen eines Namens einer der ersten näheren Kreuzungsstraße (105, 106) und der zweiten näheren Kreuzungsstraße (111, 112), die eine größere Straßenbreite hat, als den Suchzielnamen, wenn das Intervall (L) zwischen der ersten näheren Kreuzungsstraße und der zweiten näheren Kreuzungsstraße kleiner als die Schwelle ist, ausgebildet ist.

10. Texteintragsuchsystem nach einem der Ansprüche 6 bis 9, **dadurch gekennzeichnet, dass**
das Staueinrichtungsbestimmungsmittel (21) zum Bestimmen, ob sich die Staufaktoreinrichtung (85) in der Nachbarschaft der erwarteten Fahrtroute (70) und hinsichtlich der erwarteten Fahrtroute auf einer Seite einer Spur, in der ein Fahrzeug, das in die Einfahrkreuzungsstraße eingefahren ist, fährt, befindet, ausgebildet ist.

11. Texteintragsuchvorrichtung, **gekennzeichnet durch**:
ein Erwartete-Fahrtroute-Erfassungsmittel (21), das zum Erfassen einer erwarteten Fahrtroute (70) für einen mobilen Körper ausgebildet ist;
ein Staueinrichtungsbestimmungsmittel (21), das zum Bestimmen, ob sich eine Staufaktoreinrichtung (85), die eine Einrichtung ist, die einen Stau bewirkt, in der Nachbarschaft der erwarteten Fahrtroute (70) befindet, ausgebildet ist;
ein Nähere-Kreuzungsstraße-Erfassungsmittel (21), das zum Erfassen einer näheren Kreuzungsstraße (77, 78, 80, 81), die eine Straße ist, die sich in Bezug auf die Staufaktoreinrichtung (85) auf der Seite des mobilen Körpers befindet und die die erwartete Fahrtroute (70) kreuzt, wenn bestimmt wird, dass sich die Staufaktoreinrichtung (85) in der Nachbarschaft der erwarteten Fahrtroute befindet, ausgebildet ist;
ein Suchzielnamenserfassungsmittel (21), das zum Erfassen eines Namens der näheren kreuzenden Straße (77, 78, 80, 81) als einen Suchzielnamen ausgebildet ist;
ein Suchbedingungseinstellmittel (21), das zum Einstellen eines Suchworts basierend auf einer Zeichenfolge des Suchzielnamens, der durch das Suchzielnamenserfassungsmittel erfasst wird, ausgebildet ist; und
ein Suchmittel (21), das zum Extrahieren eines Texteintrags, der dem durch das Suchbedingungseinstellmittel eingestellten Suchwort entspricht, aus Texteinträgen auf einem Computernetzwerk ausgebildet ist.

12. Texteintragsuchverfahren, **gekennzeichnet durch**:
einen Schritt, in dem ein Erwartete-Fahrtroute-Erfassungsmittel (21) eine erwartete Fahrtroute (70) für einen mobilen Körper erfasst;
einen Schritt, in dem ein Staueinrichtungsbestimmungsmittel (21) bestimmt, ob sich eine Staufaktoreinrichtung (85), die eine Einrichtung ist, die einen Stau bewirkt, in der Nachbarschaft der erwarteten Fahrtroute befindet;
einen Schritt, in dem ein Nähere-Kreuzungsstraße-Erfassungsmittel (21) in dem Fall, dass bestimmt wird, dass sich die Staufaktoreinrichtung (85) in der Nachbarschaft der erwarteten Fahrtroute befindet, eine nähere Kreuzungsstraße (77, 78, 80, 81) erfasst, die eine Straße ist, die sich in Bezug auf die Staufaktoreinrichtung auf der Seite des mobilen Körpers befindet und die die erwartete Fahrtroute (70) kreuzt;
einen Schritt, in dem ein Suchzielnamenserfassungsmittel (21) einen Namen der näheren Kreuzungsstraße (77, 78, 80, 81) als einen Suchzielnamen erfasst;
einen Schritt, in dem ein Suchbedingungseinstellmittel (21) basierend auf einer Zeichenfolge des Suchzielnamens, der durch das Suchzielnamenserfassungsmittel erfasst wird, ein Suchwort einstellt; und
einen Schritt, in dem ein Suchmittel (21) einen Texteintrag, der dem durch das Suchbedingungseinstellmittel eingestellten Suchwort entspricht, aus Texteinträgen auf einem Computernetzwerk extrahiert.

13. Computerprogramm, **dadurch gekennzeichnet, dass** bewirkt wird, dass ein Computer folgende Funktionen hat:
ein Erwartete-Fahrtroute-Erfassungsmittel (21), das zum Erfassen einer erwarteten Fahrtroute (70) für einen mobilen Körper ausgebildet ist;
ein Staueinrichtungsbestimmungsmittel (21), das zum Bestimmen, ob sich eine Staufaktoreinrichtung (85), die eine Einrichtung ist, die einen Stau bewirkt, in der Nachbarschaft der erwarteten Fahrtroute (70) befindet, ausgebildet ist;
ein Nähere-Kreuzungsstraße-Erfassungsmittel (21), das zum Erfassen einer näheren Kreuzungsstraße (77, 78, 80, 81), die eine Straße ist, die sich in Bezug auf die Staufaktoreinrichtung (85) auf der Seite des mobilen Körpers befindet und die die erwartete Fahrtroute (70) kreuzt, wenn bestimmt wird, dass sich die Staufaktoreinrichtung (85) in der Nachbarschaft der erwarteten Fahrtroute befindet, ausgebildet ist;
ein Suchzielnamenserfassungsmittel (21), das zum Erfassen eines Namens der näheren kreuzenden Straße (77, 78, 80, 81) als einen Suchzielnamen ausgebildet ist;
ein Suchbedingungseinstellmittel (21), das zum Einstellen eines Suchworts basierend auf einer Zeichenfolge des Suchzielnamens, der durch das Suchzielnamenserfassungsmittel erfasst wird, ausgebildet ist; und
ein Suchmittel (21), das zum Extrahieren eines Texteintrags, der dem durch das Suchbedingungseinstellmittel eingestellten Suchwort entspricht, aus Texteinträgen auf einem Computernetzwerk ausgebildet ist.

## Revendications

1. Système de recherche de texte soumis (1), **caractérisé en ce qu'**il comprend :
un moyen d'acquisition d'itinéraire de déplacement prévu (21) configuré pour acquérir un itinéraire de déplacement prévu (70) pour un corps mobile ;
un moyen de détermination de lieu de congestion (21) configuré pour déterminer si un lieu de facteur de congestion (85), qui est un lieu provoquant une congestion, est situé ou non au voisinage de l'itinéraire de déplacement prévu (70) ;
un moyen d'acquisition de route d'intersection plus proche (21) configuré pour acquérir, dans le cas dans lequel il est déterminé que le lieu de facteur de congestion (85) est situé au voisinage de l'itinéraire de déplacement prévu, une route d'intersection plus proche (77, 78, 80, 81), qui est une route située sur le côté du corps mobile par rapport au lieu de facteur de congestion (85) et qui est en intersection avec l'itinéraire de déplacement prévu (70) ;
un moyen d'acquisition de nom cible de recherche (21) configuré pour acquérir un nom de la route d'intersection plus proche (77, 78, 80, 81) comme un nom cible de recherche ;
un moyen de réglage de condition de recherche (21) configuré pour régler un mot de recherche à partir d'une chaîne de caractères du nom cible de recherche acquis par le moyen d'acquisition de nom cible de recherche ; et
un moyen de recherche (21) configuré pour extraire un texte soumis correspondant au mot de recherche réglé par le moyen de réglage de condition de recherche à partir de textes soumis sur un réseau informatique.

2. Système de recherche de texte soumis selon la revendication 1, **caractérisé en ce que** :
le moyen d'acquisition de route d'intersection plus proche (21) est configuré pour acquérir une route qui est en intersection avec l'itinéraire de déplacement prévu sur un côté le plus proche du lieu de facteur de congestion comme une première route d'intersection plus proche (77, 78), et acquérir une route qui est en intersection avec l'itinéraire de déplacement prévu sur un côté le plus proche du lieu de facteur de congestion à côté de la première route d'intersection plus proche comme une deuxième route d'intersection plus proche (80, 81) ; et
le moyen d'acquisition de nom cible de recherche (21) est configuré pour acquérir un nom d'au moins l'une de la première route d'intersection plus proche (77, 78) et de la deuxième route d'intersection plus proche (80, 81) comme le nom de cible de recherche.

3. Système de recherche de texte soumis selon la revendication 2, **caractérisé en ce qu'**il comprend en outré :
un moyen d'acquisition d'intervalle (21) configuré pour acquérir un intervalle (L) entre la première route d'intersection plus proche (77, 78) et la deuxième route d'intersection plus proche (80, 81), dans lequel le deuxième moyen d'acquisition de nom cible de recherche (21) est configuré pour acquérir un nom de la première route d'intersection plus proche (77, 78) comme le nom cible de recherche dans le cas dans lequel l'intervalle (L) entre la première route d'intersection plus proche (77, 78) et la deuxième route d'intersection plus proche (80, 81) est supérieur ou égal à un seuil.

4. Système de recherche de texte soumis selon la revendication 3, **caractérisé en ce qu'**il comprend en outré :
un moyen d'acquisition de largeur de route (21) configuré pour acquérir une largeur de route de la première route d'intersection plus proche (77, 78) et une largeur de route de la deuxième route d'intersection plus proche (80, 81), dans lequel
le moyen d'acquisition de nom cible de recherche (21) est configuré pour acquérir un nom de l'une de la première route d'intersection plus proche (77, 78) et de la deuxième route d'intersection plus proche (80, 81) qui a une largeur de route plus grande comme le nom cible de recherche dans le cas dans lequel l'intervalle (L) entre la première route d'intersection plus proche et la deuxième route d'intersection plus proche est inférieur au seuil.

5. Système de recherche de texte soumis selon l'une quelconque des revendications 1 à 4, **caractérisé en ce que**
le moyen de détermination de lieu de congestion (21) est configuré pour déterminer si le lieu de facteur de congestion (85) est situé ou non au voisinage de l'itinéraire de déplacement prévu (70) et sur un côté d'une voie par rapport à l'itinéraire de déplacement prévu, la voie sur laquelle un véhicule se déplace le long de l'itinéraire de déplacement prévu.

6. Système de recherche de texte soumis (1), **caractérisé en ce qu'**il comprend :
un moyen d'acquisition d'itinéraire de déplacement prévu (21) configuré pour acquérir un itinéraire de déplacement prévu (100) pour un corps mobile ;
un moyen d'acquisition de route d'intersection (21) configuré pour acquérir une route d'intersection d'entrée (103), qui est une route en intersection avec l'itinéraire de déplacement prévu (100) et qu'un véhicule se déplaçant le long de l'itinéraire de déplacement prévu peut rejoindre depuis l'itinéraire de déplacement prévu ;
un moyen de détermination de lieu de congestion d'intersection (21) configuré pour déterminer si un lieu de facteur de congestion (113), qui est un lieu provoquant une congestion, est situé ou non au voisinage de la route d'intersection d'entrée (103) ;
un moyen d'acquisition de route d'intersection plus proche (21) configuré pour acquérir, dans le cas dans lequel il est déterminé que le lieu de facteur de congestion (113) est situé au voisinage de la route d'intersection d'entrée (103), une route d'intersection plus proche (105, 106, 111, 112), qui est une route située sur le côté du corps mobile par rapport à une intersection entre l'itinéraire de déplacement prévu (100) et la route d'intersection d'entrée (103) et qui est en intersection avec l'itinéraire de déplacement prévu ;
un moyen d'acquisition de nom cible de recherche (21) configuré pour acquérir un nom de la route d'intersection plus proche (105, 106, 111, 112) comme un nom cible de recherche ;
un moyen de réglage de condition de recherche (21) configuré pour régler un mot de recherche à partir d'une chaîne de caractères du nom cible de recherche acquis par le moyen d'acquisition de nom cible de recherche ; et
un moyen de recherche (21) configuré pour extraire un texte soumis correspondant au mot de recherche réglé par le moyen de réglage de condition de recherche à partir de textes soumis sur un réseau informatique.

7. Système de recherche de texte soumis selon la revendication 6, **caractérisé en ce que** :
le moyen d'acquisition de route d'intersection plus proche (21) est configuré pour acquérir une route qui est en intersection avec l'itinéraire de déplacement prévu sur un côté le plus proche de l'intersection comme une première route d'intersection plus proche (105, 106), et acquérir une route qui est en intersection avec l'itinéraire de déplacement prévu sur un côté le plus proche de l'intersection à côté de la première route d'intersection plus proche comme une deuxième route d'intersection plus proche (111, 112) ; et
le moyen d'acquisition de nom cible de recherche (21) est configuré pour acquérir un nom d'au moins l'une de la première route d'intersection plus proche (105, 106) et de la deuxième route d'intersection plus proche (111, 112) comme le nom cible de recherche.

8. Système de recherche de texte soumis selon la revendication 7, **caractérisé en ce qu'**il comprend en outré :
un moyen d'acquisition d'intervalle (21) configuré pour acquérir un intervalle entre la première route d'intersection plus proche (105, 106) et la deuxième route d'intersection plus proche (111, 112), dans lequel
le moyen d'acquisition de nom cible de recherche (21) est configuré pour acquérir un nom de la première route d'intersection plus proche (105, 106) comme le nom cible de recherche dans le cas dans lequel l'intervalle (L) entre la première route d'intersection plus proche (105, 106) et la deuxième route d'intersection plus proche (111, 112) est supérieur ou égal à un seuil.

9. Système de recherche de texte soumis selon la revendication 8, **caractérisé en ce qu'**il comprend en outré :
un moyen d'acquisition de largeur de route (21) configuré pour acquérir une largeur de route de la première route d'intersection plus proche (105, 106) et une largeur de route de la deuxième route d'intersection plus proche (111, 112), dans lequel
le moyen d'acquisition de nom cible de recherche (21) est configuré pour acquérir un nom de l'une de la première route d'intersection plus proche (105, 106) et de la deuxième route d'intersection plus proche (111, 112) qui a une largeur de route plus grande comme le nom cible de recherche dans le cas dans lequel l'intervalle entre la première route d'intersection plus proche et la deuxième route d'intersection plus proche est inférieur au seuil.

10. Système de recherche de texte soumis selon l'une quelconque des revendications 6 à 9, **caractérisé en ce que**
le moyen de détermination de lieu de congestion d'intersection (21) est configuré pour déterminer si le lieu de facteur de congestion (113) est situé ou non au voisinage de la route d'intersection d'entrée (103) et sur un côté d'une voie par rapport à la route d'intersection d'entrée, la voie sur laquelle un véhicule ayant rejoint la route d'intersection d'entrée depuis l'itinéraire de déplacement prévu (100) se déplace.

11. Dispositif de recherche de texte soumis, **caractérisé en ce qu'**il comprend :
un moyen d'acquisition d'itinéraire de déplacement prévu (21) configuré pour acquérir un itinéraire de déplacement prévu (70) pour un corps mobile ;
un moyen de détermination de lieu de congestion (21) configuré pour déterminer si un lieu de facteur de congestion (85), qui est un lieu provoquant une congestion, est situé ou non au voisinage de l'itinéraire de déplacement prévu ;
un moyen d'acquisition de route d'intersection plus proche (21) configuré pour acquérir, dans le cas dans lequel il est déterminé que le lieu de facteur de congestion (85) est situé au voisinage de l'itinéraire de déplacement prévu, une route d'intersection plus proche (77, 78, 80, 81), qui est une route située sur le côté du corps mobile par rapport au lieu de facteur de congestion et qui est en intersection avec l'itinéraire de déplacement prévu (70) ;
un moyen d'acquisition de nom cible de recherche (21) configuré pour acquérir un nom de la route d'intersection plus proche (77, 78, 80, 81) comme un nom cible de recherche ;
un moyen de réglage de condition de recherche (21) configuré pour régler un mot de recherche à partir d'une chaîne de caractères du nom cible de recherche acquis par le moyen d'acquisition de nom cible de recherche ; et
un moyen de recherche (21) configuré pour extraire un texte soumis correspondant au mot de recherche réglé par le moyen de réglage de condition de recherche à partir de textes soumis sur un réseau informatique.

12. Procédé de recherche de texte soumis, **caractérisé en ce qu'**il comprend :
une étape de moyen d'acquisition d'itinéraire de déplacement prévu (21) acquérant un itinéraire de déplacement prévu (70) pour un corps mobile ;
une étape de moyen de détermination de lieu de congestion (21) déterminant si un lieu de facteur de congestion (85), qui est un lieu provoquant une congestion, est situé ou non au voisinage de l'itinéraire de déplacement prévu ;
une étape de moyen d'acquisition de route d'intersection plus proche (21) acquérant, dans le cas dans lequel il est déterminé que le lieu de facteur de congestion (85) est situé au voisinage de l'itinéraire de déplacement prévu, une route d'intersection plus proche (77, 78, 80, 81), qui est une route située sur le côté du corps mobile par rapport au lieu de facteur de congestion et qui est en intersection avec l'itinéraire de déplacement prévu (70) ;
une étape de moyen d'acquisition de nom cible de recherche (21) acquérant un nom de la route d'intersection plus proche (77, 78, 80, 81) comme un nom cible de recherche ;
une étape de moyen de réglage de condition de recherche (21) réglant un mot de recherche à partir d'une chaîne de caractères du nom cible de recherche acquis par le moyen d'acquisition de nom cible de recherche ; et
une étape de moyen de recherche (21) extrayant un texte soumis correspondant au mot de recherche réglé par le moyen de réglage de condition de recherche à partir de textes soumis sur un réseau informatique.

13. Programme informatique **caractérisé en ce qu'**il amène un ordinateur à fonctionner comme :
un moyen d'acquisition d'itinéraire de déplacement prévu (21) configuré pour acquérir un itinéraire de déplacement prévu (70) pour un corps mobile ;
un moyen de détermination de lieu de congestion (21) configuré pour déterminer si un lieu de facteur de congestion (85), qui est un lieu provoquant une congestion, est situé ou non autour de l'itinéraire de déplacement prévu ;
un moyen d'acquisition de route d'intersection plus proche (21) configuré pour acquérir, dans le cas dans lequel il est déterminé que le lieu de facteur de congestion (85) est situé au voisinage de l'itinéraire de déplacement prévu, une route d'intersection plus proche (77, 78, 80, 81), qui est une route située sur le côté du corps mobile par rapport au lieu de facteur de congestion (85) et qui est en intersection avec l'itinéraire de déplacement prévu (70) ;
un moyen d'acquisition de nom cible de recherche (21) configuré pour acquérir un nom de la route d'intersection plus proche (77, 78, 80, 81) comme un nom cible de recherche ;
un moyen de réglage de condition de recherche (21) configuré pour régler un mot de recherche à partir d'une chaîne de caractères du nom cible de recherche acquis par le moyen d'acquisition de nom cible de recherche ; et
un moyen de recherche (21) configuré pour extraire un texte soumis correspondant au mot de recherche réglé par le moyen de réglage de condition de recherche à partir de textes soumis sur un réseau informatique.
